(19) Europäisches Patentamt
European Patent Office
Office européen des brevets

(11) **EP 4 354 354 A1**

(12) **EUROPEAN PATENT APPLICATION**

(43) Date of publication:
**17.04.2024 Bulletin 2024/16**

(21) Application number: **22201578.6**

(22) Date of filing: **14.10.2022**

(51) International Patent Classification (IPC):
**G06N 3/098** $^{(2023.01)}$      **G06N 3/045** $^{(2023.01)}$

(52) Cooperative Patent Classification (CPC):
**G06N 3/098; G06N 3/045**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(71) Applicant: **Nokia Technologies Oy**
**02610 Espoo (FI)**

(72) Inventor: **MATHUR, Akhil**
**London, N17 9GE (GB)**

(74) Representative: **Nokia EPO representatives**
**Nokia Technologies Oy**
**Karakaari 7**
**02610 Espoo (FI)**

(54) **APPARATUS AND METHOD FOR FEDERATED LEARNING ON EDGE DEVICES**

(57)    An apparatus, method and computer program is described comprising receiving, at an edge device from one or more federated learning (FL) services, one or more FL machine learning (ML) models and capabilities information associated with each FL ML model, computing the utility of each FL ML model based a quality of available training samples at the edge device for training the corresponding FL ML models and said capabilities information, ranking the FL ML models in a descending order of utility of the FL ML models; and performing training of each of the corresponding FL ML models of each FL service in a descending order of utility until a remaining available cost budget of a total available cost budget of the edge device expires.

FIG. 1

EP 4 354 354 A1

**Description**

**Field**

The specification relates to competitive federated learning (FL) on edge devices, in particular, performing FL machine learning (ML) associated with federated learning services on an edge device based selecting FL ML models for training according to a total available cost budget of the edge device.

**Background**

Conventional techniques for federated learning (FL) on edge devices (or user equipment (UEs)) assumes the edge device will participate in a single machine learning (ML) training task. This may involve an FL server of an FL service performing client selection with a goal to select those edge devices or UEs that will participate in training federated ML models in each round. In practice, "competing" FL services typically require several ML tasks to be trained on the edge device. But, there is no coordination between FL services, hence this server-centric perspective does not take into account, for example, resource constraints of the edge device for training all of the ML tasks from all "competing" FL services. Thus, there remains a need for further developments in this field.

**Summary**

In a first aspect, this specification describes an apparatus comprising means for performing: receiving, at an edge device, one or more (e.g. two or more) FL machine learning, ML, models and capabilities information associated with one or more FL ML models; computing utility of the one or more FL ML models based a quality of available training samples at the edge device for training the corresponding FL ML models and said capabilities information; ranking the one or more FL ML models in a descending order of utility based on the computed utility of the one or more FL ML models; and performing training of the corresponding FL ML models in the descending order of utility until a remaining available cost budget of a total available cost budget of the edge device expires.

The available training samples at the edge device for training the corresponding FL ML model may further comprise at least one of a set of high-loss training samples and a set of low-loss training samples associated with training said the corresponding FL ML model.

The apparatus may further comprise means for performing: assigning the one or more FL ML models an individual cost budget of the total available cost budget for the edge device for training the corresponding FL models based, at least in part, on the capabilities information associated with the corresponding FL ML model; and the means for performing training of the corresponding FL ML models further comprising selecting, for the one or more FL ML models a proportion of high-loss training samples and low-loss training samples on the edge device such that the aggregate individual cost budget for training an FL ML model on the selected training samples is less than a remaining available cost budget whilst the total utility gain for the edge device is maximised. It should be noted that the cost of training may not only directly depend on the capabilities. Instead, it may also depend on the capacity/structure of the ML model (i.e., how many layers, how many mathematical operations, how may neurons, how many connections between neurons, what kind of activation function), and the number of samples on which the model is trained.

The means for performing training of the FL ML model in a descending order of utility further comprising means for performing: selecting, from those ranked FL ML models that are untrained, an FL ML model having a highest utility; selecting, for the selected FL ML model, a set of training samples from a proportion of a set of high loss training samples and a set of low-loss training samples associated with the FL ML model based on the corresponding utility and an individual cost budget assigned for said FL ML model, wherein the individual cost budget is less than the remaining available cost budget of the total available cost budget of the edge device; training said FL ML model using the selected proportion of high-loss and low-loss training samples; updating the remaining available cost budget for the edge device by removing the individual cost budget for said selected FL ML model from said remaining available cost budget; and repeating performing training of another untrained FL ML model until the remaining cost budget of the total available cost budget of the edge device expires. Furthermore, the means for selecting, for the selected FL ML model, the set of training samples may further comprise means for performing: generating a plurality of training samples for use in training the selected FL ML model based on the local dataset of the edge device, each training sample comprising an input data instance and ground truth output data instance; measuring a mean loss value associated with the selected FL ML model based on applying the input data instances of the plurality of training samples to the selected FL ML model, wherein the mean loss value is estimated from the plurality of loss values in relation to the output data instance and corresponding ground truth output data instance; classifying the plurality of training samples as either low-loss training sample or a high-loss training sample based on comparing the corresponding loss value of the training sample with the mean loss value; determining of the FL ML model whether the selected set of training samples includes either low-loss training samples or both low-loss and high loss training samples; selecting a set of training samples by sampling from the plurality of training samples a number of training samples based on the determination for training the selected FL ML model whilst meeting an individual cost budget that is less than the remaining available cost budget; and outputting the selected set of training samples for training said selected FL ML model.

The edge device may have one or more total available cost budgets per time period. The apparatus may further comprise means for repeating, in each time period, the performance of said computing the utility, said ranking the FL ML models and said performing training for any untrained FL ML models of the one or more FL services until the remaining available cost budget of the total available cost budget for said each time period expires.

In some example embodiments, computing the utility of the one or more FL ML models further comprise means for performing: receiving data representative of a user preferences tensor or matrix, denoted P, indicating, for example, the capabilities of the FL ML models that are of interest to the user (note that P may not necessarily be related to FL model capabilities. P may denote user interests or preferences, and could be completely different from the FL model's capabilities); receiving, for a respective FL ML model, data representative of a first and second capabilities tensors or matrices, denoted XL and XALL, wherein the first capabilities tensor matrix, XL, represents the capabilities of the FL ML model when trained on low-loss training samples, and the second capabilities tensor or matrix, XALL, represents the capabilities of the FL ML model when trained on both low-loss and high-loss training samples; computing a first and second similarity tensors or matrices, denoted ZL and ZALL, based on multiplying the user preferences tensor or matrix, P, with each of the first and second capabilities tensors or matrices, XL and XALL; calculating a first utility based on applying the first similarity tensor or matrix, ZL, to a first utility function; calculating a second utility based on applying the second similarity tensor or matrix, ZALL, to a second utility function; and outputting a utility of the FL ML model based on the maximum of the first and second utility.

Furthermore, the first utility function for an *i-th* FL ML model may be based on:

$$U_i^L = \frac{e^{sum(Z_i^L)}}{k} \cdot S_i,$$

where $Z_i^L$ denotes the first similarity matrix $\mathbf{Z}_L$ of the *i-th* FL ML model, $sum(Z_i^L)$ is the sum of all elements of $Z_i^L$, and where $k$ is a scale factor between 0 and 1, which scales $U_i^L$, and is the proportion of low-loss training samples selected out of a total number of training samples $S_i$; the second utility function for the *i-th* FL ML model may be based on:

$$U_i^{ALL} = e^{sum(Z_i^{ALL})} \cdot S_i,$$

where $Z_i^{ALL}$ denotes the second similarity matrix $\mathbf{Z}_{ALL}$ of the *i-th* FL ML model, $sum(Z_i^{ALL})$ is the sum of all elements of $Z_i^{ALL}$; and the utility of the *i-th* FL ML model may be computed based on:

$$U_i = max(U_i^L, U_i^{ALL}).$$

The means for performing training of the corresponding FL ML models may further comprise means for performing: selecting a set of training samples for each of a number $N$ of FL ML models whilst ensuring the following condition is met:

$$c_1\left(S_1^L + \alpha_1 S_1^H\right) + c_2\left(S_2^L + \alpha_2 S_2^H\right) + \cdots + c_N\left(S_N^L + \alpha_N S_N^H\right) \leq C,$$

where, $c_i$ is the individual training cost per sample for the *i-th* FL ML model for $1 \leq i \leq N$, $S_i^L$ is the number of selected low-loss training samples in the selected set of training samples for the *i-th* selected FL ML model, $S_i^H$ is the number of selected high-loss training samples in the selected set of training samples for the *i-th* selected FL ML model 104i, and $\alpha_i$ is a binary value in which $\alpha_i$ = 0 when $U_i^L > U_i^{ALL}$ otherwise $\alpha_i$ = 1.

The means for performing training of each of the corresponding FL ML models may further comprise means for performing: selecting each of a number *N* of the FL ML models in a descending order of utility whilst maximizing:

$$U_{total} = U_1 + U_2 + \cdots + U_N,$$

where, $U_i$ is the computed utility for the *i-th* FL ML model for $1 \leq i \leq N$.

The total available cost budget of the edge device comprises any one or more cost budgets from the group of: an energy consumption budget; a time budget; a communication budget; a processing budget; any other cost budget for tracking the cost of training one or more FL ML model on the edge device; one or more combinations of cost budgets from the group; or any other type of overall cost budget of the edge device.

The apparatus may further comprise means for performing: training of the one or more FL ML models based on: obtaining a set of training samples associated with said FL ML model from local data of the edge device; applying a training sample to the FL ML model; estimating a loss based on a difference between the output of the FL ML model and the output indicated by each training sample; and updating a set of weights of the FL ML model based on the estimated loss.

The FL ML model may comprise any ML model from the group of: neural network; transformer-based ML model; encoder-decoder ML model; any other ML model capable of being trained based on available training samples stored on the edge device.

The said means may comprise: at least one processor; and at least one memory including computer program code. The at least one memory and computer program code may be configured to, with the at least one processor, cause the performance of the apparatus.

The edge device may comprise any from the group of: a smart phone (e.g. of a user); a smart device (e.g. of a user); a user equipment (e.g. of a user); a mobile device (e.g. of a user); an internet of things (IoT) device (e.g. of a user); a computing device (e.g. of a user); and any other computing device of a user.

In a second aspect, this specification describes a method comprising: receiving, at an edge device one or more FL machine learning, ML, models and capabilities information associated with the one or more (e.g. two or more) FL ML models; computing the utility of the one or more FL ML model based a quality of available training samples at the edge device for training the corresponding FL ML models and said capabilities information; ranking the FL ML models in a descending order of utility based on the computed utility of the FL ML models; and performing training of the corresponding FL ML models in the descending order of utility until a remaining available cost budget of a total available cost budget of the edge device expires.

The available training samples at the edge device for training the corresponding FL ML model may further comprise at least one of a set of high-loss training samples and a set of low-loss training samples associated with training said the corresponding FL ML model.

The method may further comprise: assigning the one or more FL ML models an individual cost budget of the total available cost budget for the edge device for training the corresponding FL models based, at least in part, on the capabilities information associated with the corresponding FL ML model. Training of the corresponding FL ML models may further comprise selecting, for the one or more FL ML models a proportion of high-loss training samples and low-loss training samples on the edge device such that the aggregate individual cost budget for training an FL ML model on the selected training samples is less than a remaining available cost budget whilst the total utility gain for the edge device is maximised.

Training of the FL ML model in a descending order of utility may further comprise: selecting, from those ranked FL ML models that are untrained, an FL ML model having a highest utility; selecting, for the selected FL ML model, a set of training samples from a proportion of a set of high loss training samples and a set of low-loss training samples associated with the FL ML model based on the corresponding utility and an individual cost budget assigned for said FL ML model, wherein the individual cost budget is less than the remaining available cost budget of the total available cost budget of the edge device; training said FL ML model using the selected proportion of high-loss and low-loss training samples; updating the remaining available cost budget for the edge device by removing the individual cost budget for said selected FL ML model from said remaining available cost budget; and repeating performing training of another untrained FL ML model until the remaining cost budget of the total available cost budget of the edge device expires.

Furthermore, selecting, for the selected FL ML model, the set of training samples may further comprise: generating a plurality of training samples for use in training the selected FL ML model based on the local dataset of the edge device, each training sample comprising an input data instance and ground truth output data instance; measuring a mean loss value associated with the selected FL ML model based on applying the input data instances of the plurality of training samples to the selected FL ML model, wherein the mean loss value is estimated from the plurality of loss values in relation to the output data instance and corresponding ground truth output data instance; classifying the plurality of training samples as either low-loss training sample or a high-loss training sample based on comparing the corresponding loss value of the training sample with the mean loss value; determining of the FL ML model whether the selected set of training samples includes either low-loss training samples or both low-loss and high loss training samples; selecting a set of training samples by sampling from the plurality of training samples a number of training samples based on the determination for training the selected FL ML model whilst meeting an individual cost budget that is less than the remaining available cost budget; and outputting the selected set of training samples for training said selected FL ML model.

In some example embodiments, computing the utility of the one or more FL ML models further comprises: receiving data representative of a user preferences tensor or matrix, denoted P, indicating, for example, the capabilities of the FL ML models that are of interest to the user (note that P may not necessarily be related to FL model capabilities. P may denote user interests or preferences, and could be completely different from the FL model's capabilities); receiving, for a respective FL ML model, data representative of a first and second capabilities tensors or matrices, denoted XL and XALL, wherein the first capabilities tensor matrix, XL, represents the capabilities of the FL ML model when trained on low-loss training samples, and the second capabilities tensor or matrix, XALL, represents the capabilities of the FL ML model when trained on both low-loss and high-loss training samples; computing a first and second similarity tensors or matrices, denoted ZL and ZALL, based on multiplying the user preferences tensor or matrix, P, with each of the first and second capabilities tensors or matrices, XL and XALL; calculating a first utility based on applying the first similarity tensor or matrix, ZL, to a first utility function; calculating a second utility based on applying the second similarity tensor or matrix, ZALL, to a second utility function; and outputting a utility of the FL ML model based on the maximum of the first and second utility.

Furthermore, the first utility function for an *i-th* FL ML model may be based on the formula provided above; the second utility function for the *i-th* FL ML model may be based on the formula provided above; and the utility of the *i-th* FL ML model may be computed based on the formula provided above.

Training of the corresponding FL ML models may further comprise: selecting a set of training samples for each of a number $N$ of FL ML models whilst ensuring the condition described above is met.

The means for performing training of each of the corresponding FL ML models may further comprise means for performing: selecting each of a number $N$ of the FL ML models in a descending order of utility whilst maximizing the formula provided above.

The total available cost budget of the edge device comprises any one or more cost budgets from the group of: an energy consumption budget; a time budget; a communication budget; a processing budget; any other cost budget for tracking the cost of training one or more FL ML model on the edge device; one or more combinations of cost budgets from the group; or any other type of overall cost budget of the edge device.

The method may further: training of the one or more FL ML models based on: obtaining a set of training samples associated with said FL ML model from local data of the edge device; applying a training sample to the FL ML model; estimating a loss based on a difference between the output of the FL ML model and the output indicated by each training sample; and updating a set of weights of the FL ML model based on the estimated loss.

In a third aspect, this specification describes computer-readable instructions which, when executed by a computing apparatus, cause the computing apparatus to perform any method as described herein (including the method of the second aspect described above).

In a fourth aspect, this specification describes a computer-readable medium (such as a non-transitory computer-readable medium) comprising program instructions stored thereon for performing any method as described herein (including the method of the second aspect described above).

In a fifth aspect, this specification describes an apparatus comprising: at least one processor; and at least one memory including computer program code which, when executed by the at least one processor, causes the apparatus to perform (at least) any method as described herein (including the method of the second aspect described above).

In a sixth aspect, this specification describes a computer program comprising instructions for causing an apparatus to perform at least the following: receiving, at an edge device from one or more federated learning, FL, services, one or more (e.g. two or more) FL machine learning, ML, models and capabilities information associated with each FL ML model; computing the utility of each FL ML model of each FL service based a quality of available training samples at the edge device for training the corresponding FL ML models and said capabilities information; ranking the FL ML models in a descending order of utility based on the computed utility of the FL ML models; and performing training of each of the corresponding FL ML models of each FL service in the descending order of utility until a remaining available cost budget of a total available cost budget of the edge device expires. Optional features of the sixth aspect may comprises any features of the first or second aspects.

In a seventh aspect, this specification describes: an input or a receiver (or some other means) for receiving, at an edge device from one or more federated learning, FL, services, one or more (e.g. two or more) FL machine learning, ML, models and capabilities information associated with each FL ML model; a first processor (or some other means) for computing the utility of each FL ML model of each FL service based a quality of available training samples at the edge device for training the corresponding FL ML models and said capabilities information; a second processor (or some other means) for ranking the FL ML models in a descending order of utility based on the computed utility of the FL ML models; and a training module (or some other means) for performing training of each of the corresponding FL ML models of each FL service in the descending order of utility until a remaining available cost budget of a total available cost budget of the edge device expires. Optional features of the seventh aspect may comprises any features of the first or second aspects.

## Brief Description of Drawings

Example embodiments will now be described, by way of non-limiting examples, with reference to the following schematic drawings, in which:

    FIG. 1 is a block diagram of an example system;
    FIG. 2a is a flow chart showing an algorithm in accordance with an example embodiment;
    FIG. 2b is another flow chart showing an algorithm in accordance with an example embodiment;
    FIG. 3 is a block diagram of an edge device with an FL broker subsystem for the example system;
    FIG. 4 is a signal flow diagram of another example algorithm in accordance with an example embodiment;
    FIG. 5 is a block diagram of components of a system in accordance with an example embodiment; and
    FIG. 6 shows an example of tangible media for storing computer-readable code which when run by a computer may perform methods according to example embodiments described above.

## Detailed Description

The scope of protection sought for various embodiments of the invention or the various combinations of the embodiments is set out by the claims. The embodiments and features, if any, described in the specification that do not fall under the scope of the independent claims are to be interpreted as examples useful for understanding various embodiments of the invention.

In the description and drawings, like reference numerals refer to like elements throughout.

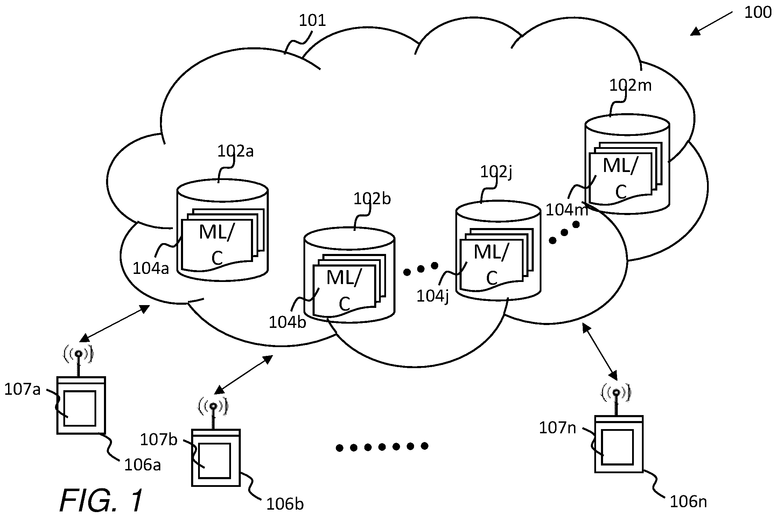

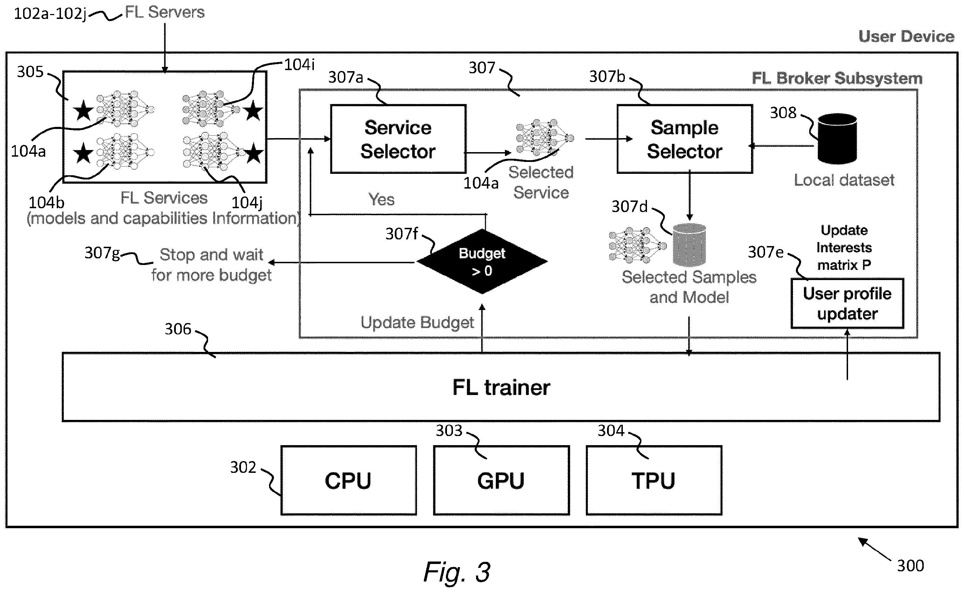

FIG. 1 is a block diagram of an example federated learning (FL) system 100. The FL system 100 comprises a communication network 101 including one or more FL servers 102a-102m, where each of the FL servers 102a-102m may include an FL service providing one or more FL machine learning (ML) models and corresponding capabilities 104a-104m (e.g., ML/C), and a plurality of edge devices (or user devices/equipment) 106a-106n, in which each edge device 106a includes an FL broker subsystem 107a. In this example, each edge device 106a may be connected to a set of FL servers 102a-102j and is able to obtain multiple FL services including FL ML models and capability/requirement information 104a-104j. The multiple FL services are configured to have one or more edge devices 106a-n to perform local training of the corresponding FL ML models 104a-104j on the user's locally stored data of edge device 106a-n. Alternatively or additionally, the edge device 106a-n can also have its own FL services function (see FIG. 3, FL Services 305) that collects information on one or more FL ML models from the FL servers 102a-102m corresponding to the capabilities/requirement 104a-104m of the FL ML models. In this manner, FL algorithms/models on the FL servers 102a-102m are configured to ensure local training of a FL ML model locally on the one or more edge devices 106a-n, and then aggregate the trained FL ML models from the one or more edge devices 106a-106n by the coordinating FL server 102a-102m. This is performed until convergence of the corresponding FL ML models. This provides the advantage of preserving the privacy of user data on each local edge device 106a, which avoids said user data being disseminated to the FL services and beyond.

User equipment or edge devices 106 (e.g., smart phones/devices) are becoming ever more ubiquitous and constantly capture sensory information and user data to aid users in daily tasks. An edge device or user equipment may comprise or represent any type of device of a user capable of processing and storing user data/local data in local storage on the device. Examples of edge devices or user equipment include, without limitation, for example a smart phone; a tablet; a laptop; a portable computer; a smart device; a smart watch, a personal health monitoring device, an IoT (Internet of Things) device; smart earbuds; an AR/XR (Augmented Reality/Extended Reality) device; a mobile device; a mobile communication device; a smart TV (television); a smart assistant device; a still/video camera; a microcontroller unit (MCU); an engine control unit (ECU); a vehicle control unit (VCU); a vehicle; a router or other network device of a user; a computing device of a user; any device capable of processing, computing and storing user data/local data locally; and any other computing device of a user suitable for, or any combination thereof. Exploiting this large-scale mass of natural computing resource and distributed data in a privacy-preserving manner is a longstanding goal of ML, especially for FL ML. An important milestone in this direction has been the recent emergence of FL, which enables collaborative processing/training of ML models (also known as FL ML models) while preserving the privacy of user data or local data collected on user equipment and/or edge devices. Typically, FL algorithms involve training of an FL ML model locally on each of a plurality of user equipment or edge device using training sample data derived from the user data locally stored on the user equipment or edge device.

A FL ML model may include any type of ML model such as, without limitation, for example an FL ML model from the group of: neural network ( such as a deep neural network, a convolutional neural network, etc.); transformer-based ML model; encoder-decoder ML model; and/or any other ML model capable of being trained based on available training samples derived from user data or local data that is locally stored on an edge device or user equipment. A FL service includes one or more FL ML models for predicting, detecting or estimating one or more predetermined classes in response to applying input data to the one or more FL ML models. The input data that is applied to the FL ML model may be based on predefined input data, which can be derived from user data or local data on each edge device and the like. In addition, each FL ML model may include predetermined hyperparameters that have been chosen and/or selected by operators of the FL service prior to sending the corresponding FL ML models 104a-104m for training on the one or more edge devices 106a-106n. The FL ML models 104a-104m may further include instructions and/or functionality that may be used to generate the required training samples from the user data and/or local data locally stored on an edge device 106a that are needed for training the corresponding FL ML models 104a-104m.

The edge device 106a-106n may further include a training mechanism, e.g. an FL trainer, that maybe configured to perform an iterative training process for one or more FL ML models on the edge device based on: obtaining a set of training samples associated with or suitable with said FL ML model from local data and/or user data stored on the edge device. Once the one or more training samples for the FL ML model have been obtained, the one or more training samples is applied to the input of the FL ML model, which in response, processes the input data and outputs data representative of a predicted, detected, or estimated one or more classes or outputs associated with the FL ML model. Based on these outputs, a loss is estimated based, without limitation, for example on a difference between the output of the FL ML model and the output indicated by the one or more training samples. A set of weights and/or parameters of the FL ML model may be updated based on the estimated loss or according to a loss/cost function. The training process maybe iterated until a maximum number of iterations has been met and/or the overall loss output by the FL ML model is below an error threshold indicative of the FL ML model being validly trained. The maximum number of iterations, and/or error threshold etc., may be set by the operator of the FL service providing the FL ML model for training on the edge devices 106a-106n.

Once a trained FL ML model on the one or more user equipment/edge device has completed training, the trained FL ML models are sent back to the FL service or FL server (e.g., a coordinating server) for aggregation of the individual trained FL ML models into a final FL ML model on the FL server/service. Subsequent repetition of these steps for several rounds may occur until convergence of the final aggregated FL ML model. For simplicity, although edge device is referred to herein, this is for simplicity and by way of example only, it is to be appreciated by the skilled person that the FL system 100 as described herein is applicable to, not only edge devices, but also to any other type of user device, smart devices, smart phones, user equipment, mobile devices, laptops, personal computers, and/or any other user computing devices, and/or user computing system/device, combinations thereto, modifications thereof, and the like, and/or as the application demands.

In current implementations of federated or distributed learning, it is assumed that an edge device will be participating in a single learning FL ML task (i.e., FL ML model training). Accordingly, when the FL ML training task reaches each edge device 106a, the edge device 106a executes the training operation on its local user data and updates the model parameters of the FL ML model being trained. However, in practice, several "competing" FL ML tasks/models may need to be trained on each of the edge devices 106a-106n. For example, a company A operating FL service on FL server 102a may want to train an object recognition FL ML model, whilst company B operating FL service on FL server 102b may want to train a scene recognition FL ML model, and so on. At the same time, the user edge devices 106a-106n have real-world resource constraints in relation to their computation capabilities, energy consumption, communication capabilities etc. and the like, which restricts the amount of training the edge device 106a-106n may perform whilst ensuring the edge device 106a-106n remains usable for the user. This means a specific edge devices 106a-106n may not be able to train every FL ML task (e.g., training one or more FL ML models) that each FL ML service may push to them. Each of the FL broker subsystems 107a-107n on each of the corresponding edge devices 106a-106n are configured to select the best FL ML tasks for training on the edge devices 106a-106n that meet an available total cost budget, $C$, on the edge device 106a-106n.

The edge devices 106a-106n include corresponding FL broker subsystems 107a-107n that are configured to efficiently facilitate local training of those ML models 104a-104m obtained by the corresponding edge devices 106a-106n. The FL broker subsystem 107a may be implemented on each edge device 106a as a software and/or hardware component. The FL broker subsystems 107a-107n on the edge devices 106a-106n are configured to achieve a trade-off between the costs and utility of training multiple ML models on the corresponding edge devices 106a-106n, and thus outputs and implements a training plan for one or more edge devices 106a-n that maximizes total utility, $U_{total}$, of training all FL ML models while adhering to the resource constraints defined by the total available cost budget, **C**. This is a device-centric perspective in which each edge device 106a is configured to determine which one or more FL ML tasks/models should it participate in based on user preferences and the capabilities/requirements of each FL ML model of the FL ML tasks.

The edge device 106a may have an overall or total available cost budget, **C**, that has been set or assigned for performing FL ML training of one or more or all the FL ML tasks received from the multiple FL servers 102a-102j. The total available cost budget, **C**, may include any one or more cost budgets from the group of: an energy consumption budget; a time budget; a communication budget; a processing budget; a memory budget; any other cost budget for tracking the cost of training one or more FL ML models on the edge device; one or more combinations of cost budgets from the group of cost budgets; and/or any other type of overall cost budget of the edge device 106a. For example, the total available cost budget, **C**, may be based on any type of resource available at the edge device 106a such as, without limitation, for example: an energy consumption budget (e.g., 10 kilo Joules per day); a processing budget such as, without limitation, for example a central processing unit (CPU) usage budget (e.g., 40% of CPU usage); a time budget (e.g., 60 minutes per day); a communication budget or cost; and or any other computational resource budget or other resource budget available on the edge device 104a that may be used to measure the training load of training the one or more FL ML models 104a-104j from FL services of FL servers 102a-102j. The total available cost budget, **C**, may be a cost budget per time period (e.g., per day or week etc.). Thus, the edge device 106a may use resources for training the one or more FL ML models 104a-104j up to the total available cost budget, **C**, per time period. The total available cost budget, **C**, may be specified by, without limitation, for example by the user of the edge device 106a or by the edge device's operating system and/or in any other manner and the like.

The total available cost budget, **C**, for the edge device 106a-n may be calculated by the FL broker subsystem 107a-n and used to perform at least some of the training of one or more or all the multiple FL ML models 104a-104j that have been pushed to/accepted by/received at the user edge device 106a-n. For example, the one or more federated training ML tasks/models need to be completed within this budget. Alternatively, the total available cost budget, **C**, per time period may be used for training some or all of the multiple FL ML models 104a-104j until a remaining available cost budget, $C_R$, of the total available cost budget, **C**, expires for that time period. In the next time period, the a remaining available cost budget is reset to the total available cost budget, **C**, and a further set of the one or more FL ML models 104a-104j may use the associated resources of the edge device 106a-n, in which the individual cost budget, $C_M$, used training each FL ML model is removed from the remaining available cost budget, $C_R$ until the remaining available cost budget, $C_R$ of the total available cost budget, **C**, for that time period has expired, e.g. reaches o. The selection of those FL ML models 104a-104j that are to be first trained on the edge device 106a-n may be based on a utility measure, or utility, calculated by the FL broker subsystem 107a-n for each of the FL ML models 104a-104j. For example, the FL broker subsystem 107a may rank the utility for each FL ML model 104a-104j for edge device 104a, and select the topmost ranked FL ML model 104a-104j for training first, followed by the remaining FL ML models 104a-104j in descending order of utility until either all FL ML models 104a-104j have been trained and/or some of the FL ML models 104a-104j have been trained when the remaining available cost budget, $C_R$ of the available cost budget, **C**, for the time period expires.

The each of the FL ML models 104a-104j has an individual training cost per training sample, $C_i$, associated with training said each FL ML model. The cost for training each FL ML model may be calculated based on a selected number of training samples required for training the FL ML model. For example, the FL ML model may be trained on either: a) high-loss training samples derived from local user data; b) low-loss training samples derived from local user data; or c) a proportional combination of both high-loss and low-loss training samples. Each of the FL ML models 104a-104m maybe configured to include instructions or functions for use in generating training samples (e.g., high-loss training samples, low-loss training samples, or both) from local user data on local storage of each of the edge devices 106a-106n. The individual cost for training an FL ML model may be calculated based on the individual training cost per training sample, $c_i$, and the number of selected training samples for training the corresponding FL ML model 104j on edge device 104a. The individual training cost per training sample, $c_i$, maybe computed in a calibration training session on the edge device 104a prior to the FL broker subsystem 107a generating and implementing the training plan on the edge device 104a. As an example, the number of training samples for each of the FL ML models 104a-104j may be selected to ensure that the summation or aggregation of the individual cost budgets for training one or more or all of the FL ML models 104a-104j on the user edge device 104a meet the total available cost budget, **C**.

For example, the FL ML models 104a-104j may be ranked based on the utility of each FL ML model has to the edge device 104a and/or to the user of the edge device 104a and the top most ranked FL ML model may be selected to be trained first, followed by the remaining FL ML models 104a-104j in descending order of utility. The remaining available cost budget, $C_R$ may be initialised to the total available cost budget, **C**, and is reduced as each FL ML model is trained until it expires. Alternatively, it may be that the individual costs for training one or more or all of the FL ML models 104a-104j within the total available cost budget, **C**, is not feasible, for example, the number of training samples for training each of the FL ML models 104a-104j may not be enough for meaningful training of all FL ML models. In such a case, the FL ML models 104a-104j may also be ranked based on the utility of each of the FL ML models 104a-104j, the number of training samples for training one or more of the higher ranked FL ML models 104a-104j is selected to provide meaningful training of these higher ranked FL ML models 104a-104j within the remaining available cost budget, $C_R$ of the total available cost budget, **C**, and once trained, the remaining lower ranked FL ML models 104a-104j may be trained in another time period when the remaining available cost budget, $C_R$ of the total available cost budget, **C**, resets.

In addition, each of the FL broker subsystems 107a-107n may calculate the utility of each of the FL ML models 104a-104m that may be received by each of the corresponding edge devices 106a-106n based on user preferences and/or edge device capabilities/requirements in relation to the type of FL ML models 104a-104m being trained and capability/requirement information associated with each of the FL ML models 104a-104m. The each of the FL broker subsystems 107a-107n may be configured to select the best FL ML training tasks for training on the edge devices 106a-106n based aligning the user preferences on each device in relation to each FL ML task (e.g., user preferences in relation to the type of FL ML model being trained) with the capabilities/requirements of each of the FL ML models 104a-104m. The user preferences may include data representative of the interests of the user in relation to their edge device 106a having new capabilities having one or more FL ML models that the user considers useful to them (e.g., for a user interested in sports, having their edge device 106a with new capabilities of detecting running, walking, playing squash, or performing any other sport etc.). The capabilities/requirements for each FL ML model 104a may include what the FL ML model is a capable of outputting and also the types of training samples required for training the FL ML model, which may include data representative of either: a) whether high-loss training samples derived from local user data are required; b) low-loss training samples derived from local user data are required; or c) both high-loss and low-loss training samples are required.

The FL broker subsystem 107a on each edge device 106a uses the alignment between user preferences and the capabilities/requirements of each of the FL ML models 104a-104m that may be pushed to each edge device 106a to calculate a utility measure, U, of each of the multiple FL ML models 104a-104j on each edge device. The utility measure, or utility, calculation for an FL ML model 104a may be based on a combination of data representative of the user preferences and the FL ML model's 104a capabilities/requirements. The total utility, $U_{total}$, for each edge device 104a is the sum of each of the utilities calculated for each of the multiple FL ML models 104a-104j on the edge device 104a.

For example, the user preferences for each of the multiple FL ML models 104a-104j on edge device 106a may be represented as an M dimensional vector, **p**, where M is the number of the multiple FL ML models 104a-104j on edge device 106a. Each of the elements in the preferences vector, p, for the user of edge device 106a may be a phrase or word describing the types of detection the user of edge device 106a is interested in. The preferences vector, **p**, may be transformed into an M × K dimensional tensor, **P**, of user preferences, where K is the dimension of each word embedding. The capabilities/requirements of each of the FL ML models 104a-104j maybe represented as one or more K dimensional tensors and are based on the FL ML models ability to learn new classes or be personalised to the user of the edge device 104a. In addition, a first capabilities/requirement tensor may be based on an FL ML model's ability to use low-loss training samples for use in predicting a number of $n$ classes, where $n \geq 1$, which may be useful for personalisation of the corresponding FL ML model to the user or edge device 104a. However, this may not be useful for learning new classes. The first capabilities tensor may be a K × $n$ dimensional tensor, where $n$ is the number of classes and K is the dimension of the embedding. In a second capabilities tensor may be based on the FL ML model's ability to use both a combination of high-loss training samples and low-loss training samples to learn a number, $m$, of new classes, some of which may be of interest to the user. The second capabilities tensor may be a K × $m$ dimensional tensor, where $m$ is the number of new classes and K is the dimension of the embedding. It is noted, that using high-loss training samples may result in catastrophic forgetting of the current weights and/or parameters of the current FL ML model. The utility for each of the FL ML models 104a-104j may be calculated by determining the maximum utility for the *i-th* FL service or FL ML model based on training the FL ML model on only low-loss training samples or training the FL ML model on a combination of low-loss and high-loss training samples. This maybe performed based on combining the user preferences tensor, **P**, with each of the first and second capabilities tensors of the FL ML model and employing a corresponding utilities function that is configured to estimate a first utility of training the FL ML model with low-loss training samples and a second utility of training the FL ML model with a combination of low-loss and high-loss training samples. The utility for the FL ML model is the maximum of the first and second utilities. This calculation is performed for each of the multiple FL ML models 104a-104i on edge device 106a. This calculation is performed for each of the edge devices 106a-106n in relation to each of the corresponding FL ML models 104a-104m on each of these edge devices 106a-106n. Thus, each of the FL services of each of the corresponding multiple FL ML models 104a-104j on each edge device 106a has a corresponding utility.

In operation, let the total available cost budget, **C**, for an edge device 106a per time period be used for training some or all of the multiple FL ML models 104a-104j on edge device 104a until the remaining available cost budget, $C_R$ of the total available cost budget, **C**, expires for that time period. The selection of those FL ML models 104a-104j that are to be first trained on edge device 106a may be based on the utilities calculated by the FL broker subsystem 107a for each of the FL ML models 104a-104j. Once calculated, the FL broker subsystem 107a may rank the utility for each FL ML model 104a-104j on edge device 104a, and select the topmost ranked FL ML model 104a-104j for training first, once training has completed on the selected training samples, the remaining available cost budget, $C_R$ of the total available cost budget, $C$, is updated by removing the individualised cost associated with the selected FL ML model from the remaining available cost budget, $C_R$, then the next ranked FL ML model is selected for training, where the remaining available cost budget, $C_R$ of the total available cost budget, $C$, is used for selecting training samples to ensure the individual cost of training the next ranked FL ML model is within the remaining available cost budget, $C_R$. This is followed by any remaining FL ML models 104a-104j in descending order of utility until either all FL ML models 104a-104j have been trained and/or some of the FL ML models 104a-104j have been trained should the remaining available cost budget, $C_R$ of the total available cost budget, $C$, for the time period expire, i.e. when it reaches o or the cost of training the next available FL ML model is greater than the remaining available cost budget, $C_R$ of the total available cost budget, $C$. For each selected FL ML model, the FL broker subsystem 107a may select a training sample set for training the FL ML model. This may be based on comparing the first and second utilities for the selected FL ML model to determine whether only low-loss training samples or a combination of low-loss training samples and high-loss training samples may be used for training the selected FL ML model. In the next time period, the remaining available cost budget, $C_R$ of the total available cost budget, $C$, may be reset back to the total available cost budget, $C$ and a further set of the multiple FL ML models 104a-104j that have not been trained and/or require further training may use the associated resources of the edge device 104a until, again, the remaining available cost budget, $C_R$ of the total available cost budget, $C$, for that time period expires.

The FL broker subsystems 107a-107n on each of the edge devices 106a-106n are configured to achieve a trade-off between the available total available cost budget and total utility of training multiple ML models on each of the corresponding edge devices 106a-106n, and thus outputs and implements a training plan for each edge device 106a that maximizes total utility, $U_{total}$, of training all FL ML models while adhering to the resource constraints defined by the total available cost budget, $C$. This is a device-centric perspective in which each edge device 106a is configured to determine which FL ML tasks should participate in based on user preferences and the capabilities of each FL ML model of the FL ML tasks.

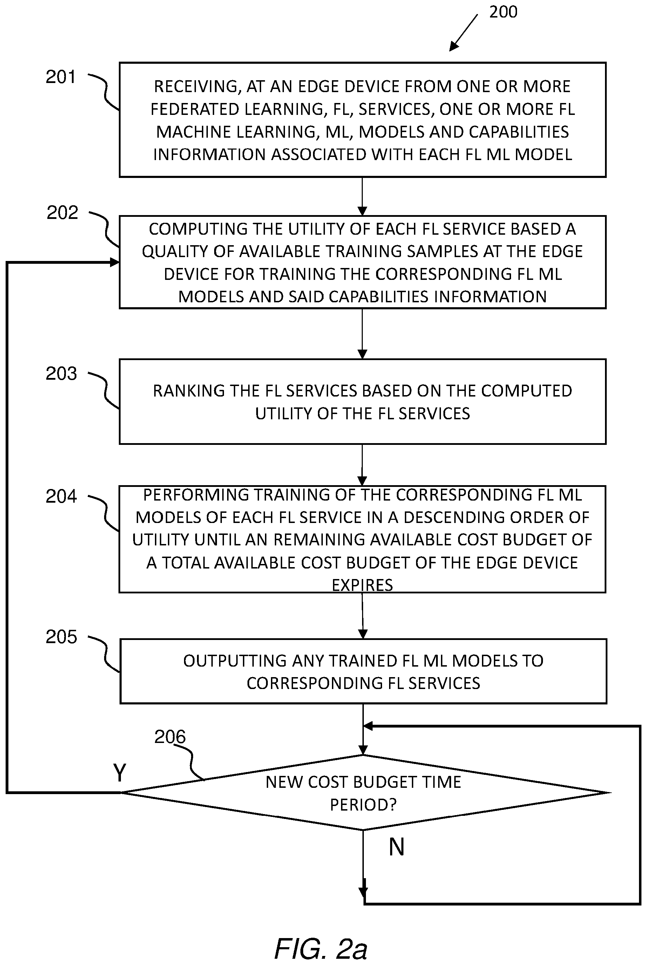

FIG. 2a is a flow diagram illustrating an example FL training process 200 for use by each of the FL broker subsystems 107a-107n of each of the edge devices 106a to 106m of FL system 100 of FIG. 1 according to one or more example embodiments. The FL training process 200 may be performed by hardware, software, firmware and/or a combination thereof. In some embodiments, the FL training process 200 may be performed by one or more processors of the edge device 106a under the control of the FL subsystem 107a of the edge device 106a. The FL training process 200 may be stored as computer-readable instructions (software code) stored on memory, which when executed on a processor of the edge device 106a, may cause the process to perform the FL training process 200. The FL training process 200 may include the following operations of:

In operation 201, receiving, at the edge device 106a, for example, from one or more FL services of one or more FL servers 102a-102m, one or more FL ML models 104a-104j along with capabilities/requirements information associated with each of the FL ML models 104a-104j.

In operation 202, computing the utility of each of the FL ML models 104a-104j associated with the FL services based a quality of available training samples at the edge device 106a for training the corresponding FL ML models 104a-104i and the corresponding capabilities/requirement information. As an example, the available training samples at the edge device 106a for training each of the corresponding FL ML models 104a-104j may further include at least one of a set of high-loss training samples and a set of low-loss training samples associated with training said each of the corresponding FL ML models 104a-104j.

In operation 203, ranking the FL ML models 104a-104j of the FL services based on the computed utility of each of the FL ML models 104a-104j of the FL services.

In operation 204, performing training of the corresponding FL ML models 104a-104j of each of the FL services in a descending order of utility until a remaining available cost budget, $C_R$, of a total available cost budget, $C$, of the edge device expires. As an example, performing training of each of the corresponding FL ML models 104a-104m may further include selecting, for each FL ML model of an FL service, a proportion of high-loss training samples and low-loss training samples on the edge device 106a such that the aggregate individual cost budget for training each of the FL ML models 104a-104j on the selected training samples is less than the total available cost budget, $C$, whilst the total utility gain for the edge device 106a is maximised.

In operation 205, outputting/sending any trained FL ML models of the FL ML models 104a-104j to the corresponding FL services/servers 102a-102m for use by the FL services in aggregating the corresponding trained FL ML models into an aggregated or final FL ML model.

Each FL ML model of an FL service may be assigned an individual cost budget of the total available cost budget, $C$, for the edge device 104a for training the corresponding FL ML models based, at least in part, on the capabilities/requirements information associated with the corresponding FL ML model and also user preferences associated with each of the FL ML models 104a-104j. The user preferences provide an indication of the user interest in each FL ML model 104a-104j and/or their predicted, estimated or detected output and the like.

The edge device 106a may include one or more total available cost budgets, $C$, per time period, where the FL training process is repeated, in each time period, in relation to the operations 202-205 of performing said computing the utility, said ranking the FL services and said performing training for any further untrained FL ML models 104a-104j of the one or more FL services until the remaining available cost budget, $C_R$, of a total available cost budget, $C$, for said each time period expires.

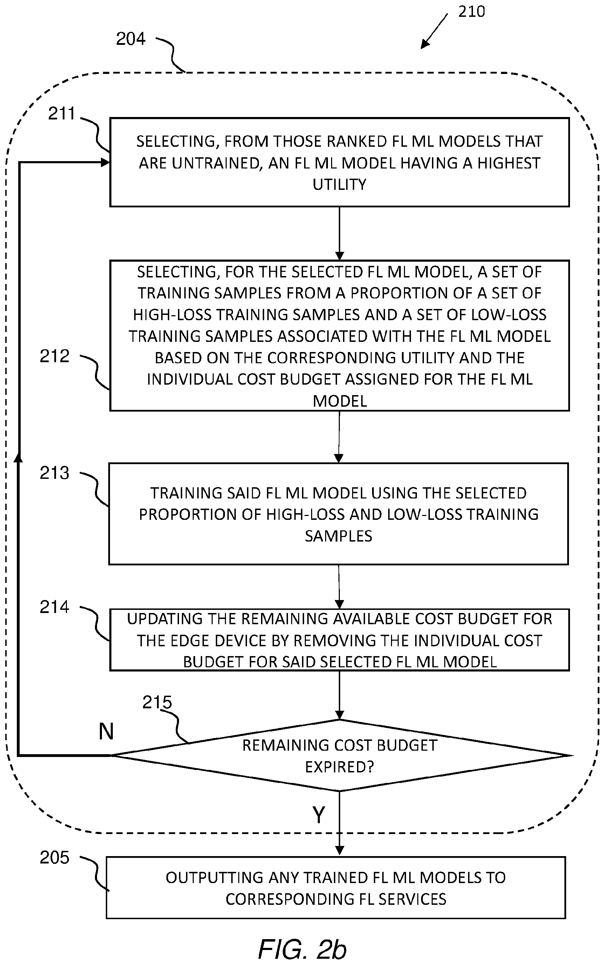

FIG. 2b is a flow diagram illustrating an example FL ML model training process 210 corresponding to operation 204 of FL training process 200 of FIG 2a according to one or more example embodiments. In operation 204 of FL training process 200, each FL ML model 104a-104j is trained in a descending order of ranked utilities until the remaining available cost budget, $C_R$, of the total available cost budget, $C$, of the edge device 106a expires. The remaining available cost budget, $C_R$, of the total available cost budget, $C$, may be reset back to the total or overall available cost budget, $C$, which is set by the user and the like and reused in subsequent time periods (e.g. each hour, day, week or month and the like) for any FL ML models that have not yet been trained or require further training as the application demands. The FL ML model training process 210 may include the following operations of:

In operation 211, selecting, from those ranked FL ML models of the FL services with an untrained FL ML model, an FL ML model having a highest utility.

In operation, 212, selecting, for the selected FL ML model, a set of training samples from a proportion of a set of high-loss training samples and a set of low-loss training samples associated with the FL ML model based on the corresponding utility and the individual cost budget allocated or assigned for said FL ML model of the FL service.

In operation 213, training the selected FL ML model using the selected proportion of high-loss and low-loss training samples.

In operation 214, updating the remaining available cost budget, $C_R$, of the total available cost budget, $C$, for the edge device 106a by removing the individual cost budget, $C_M$, used for training the selected FL ML model of said FL service from the remaining available cost budget, $C_R$.

In operation 215, determining whether there is any remaining available cost budget, $C_R$, of the edge device 106a for training another FL ML model or whether said remaining available cost budget, $C_R$, has expired. If the remaining available cost budget, $C_R$, for the edge device 106a has expired (e.g., Y), then proceed to step 205, otherwise (e.g., N) proceed to step 211 for repeating performing training of another untrained FL ML model of each FL service until the remaining available cost budget, $C_R$, of the total available cost budget, $C$, of the edge device 106a expires.

FIG. 3 is a block diagram of an edge device 106a-n or user equipment apparatus 300 for use with the system 100 or processes 200 or 210 in accordance with an example embodiment. The edge device or user equipment apparatus 300 includes at least one processor 302 (e.g., a central processing unit (CPU)), and at least one memory including computer program code, the at least one memory and computer program code configured to, with the at least one processor 302, cause the performance of the FL system 100, FL training process 210 or FL ML training process 210 of FIGs 1, 2a or 2b. The edge device 300 may optionally include at least one graphics processing unit (GPU) 303, which may be used for training one or more FL ML models 104-104j of one or more FL services/servers 102a-102j. The edge device 300 may optionally include at least one trusted processing unit (TPU) 304 (or trusted platform module), which may be used for securing hardware using integrated cryptographic keys. The edge device 300 further comprises various component, such as a FL services component 305, an FL trainer 306, an FL broker subsystem 307, that further comprises a FL ML model selector 307a, a sample selector 307b, a sample storage 307d, a user profile updater 307e, a budget updater 307f and a local data set 308. The afore-mentioned components may be implemented as related computer program code/software/application logic, hardware (such as a processor and memory or circuitry), or any combination thereof. The FL services component 305 is configured for receiving multiple FL ML models 104a-104i and their corresponding capabilities/requirement information, which is coupled to an FL broker subsystem 307 configured for determining a training plan based on a calculated utility of each of the FL ML models 104a-104i and corresponding total available cost budget, **C**, of the edge device 300. The total available cost budget, **C**, may be set by the user of the edge device 300 or by the operating system of the edge device 300. The utility of each FL ML model 104a is calculated based on data representative of the capabilities/requirement information of each FL ML model 104a and/or the user preferences indicating the user's interests associated with the FL ML models 104a-104i retrieved from FL services/servers 102a-102i by FL services component 305. The FL broker subsystem 307 is further coupled to an FL trainer 306 configured for receiving a selected FL ML model 104a and a corresponding selected set of training samples obtained from user data or local dataset stored in local storage 308 of the edge device 300. The FL trainer 306 may use the CPU 302 and/or GPU 303 of the edge device 300 for training the selected FL ML model 104a using the corresponding selected set of training samples.

In operation, the user of edge device 300 may be interested in one or more FL ML models 104a-104j of the FL services/servers 102a-102m. These user interests may be input to the edge device 300 via a user profile updater 307e of the FL broker subsystem. The FL services component 305 may be used to retrieve the set of FL ML models 104a-104j and corresponding capabilities/requirements information from the corresponding FL services/servers 102a-102j. The FL services component 305 interacts with the FL broker subsystem 307 of said edge device 300 providing the FL ML models 104a-104j for training on the edge device 300 using the user data/local dataset stored in local storage 308 of the edge device 300. On receiving the set of FL ML models 104a-104j, the FL broker subsystem 307 uses an FL ML model selector 307a, which is configured to calculate a utility measure, or utility, for each of the received set of FL ML models 104a-104j. Each utility of an FL ML model 104a is calculated based on inputting the capabilities of the FL ML model 104a and the user preferences to a utility function, which outputs an estimate of the utility of the FL ML model 104a. The FL ML model selector 307a then ranks the FL ML models 104a-104j based on their calculated utilities. Once ranked, the FL ML model selector 307a first selects the FL ML model 104a of an FL service with the highest added utility for the edge device 300 (e.g., Ua) for training via FL trainer 306.

In essence, the FL trainer 306 is configured to train each FL ML model 104a. Training of the FL ML model 104a may be based on obtaining the selected training sample dataset comprising a plurality of training samples generated from user data/local data in the local storage 308 of the edge device 300. The FL ML model 104a may include functionality or instructions for the Sample Selector 307b of the FL broker subsystem 307 to obtain the training sample dataset from local storage 308 of the edge device 300. Each training sample comprising data representative of user data/local data associated with training the FL ML model 104a to output or predict one or more classes based on the training sample as input. The FL ML model 104a and the selected or obtained set of training samples or training sample dataset is output to the FL trainer 306 for training the FL ML model 104a. For each training iteration of a plurality of training iterations the following maybe performed: one or more training samples (or a batch of training samples) are applied to the FL ML model 104a, which outputs one or more estimated classes; an estimation of a loss is performed based on a difference between the one or more estimated classes output by the FL ML model 104a and the corresponding one or more classes associated with each of the one or more training samples. The set of weights of the FL ML model 104a may be updated based on the estimated loss. In each subsequent iteration of the plurality of training iterations until the individual cost budget for the FL ML model 104a expires, a further one or more training samples (e.g. further batches of training samples) are retrieved for applying to the FL ML model 104a, estimating the loss and updating the weights of the FL ML model 104a and the like. Training the FL ML model 104a may stop once a stopping criterion is reached, e.g. an error threshold is met, or a maximum number of training iterations is reached, or the individual cost budget associated with training the FL ML model 104a is reached or expires, and/or any other performance metric associated with the particular type of FL ML model 104a is met.

Each FL ML model 104a may be trained using a selected set of hyperparameters that the corresponding ML learning process or algorithm of the FL ML model 104a uses, during training, to iteratively generate trained model parameters (e.g. one or more sets of weights and/or coefficients) defining the trained FL ML model 104a of FL service/server 102a. Hyperparameters may include, without limitation, for example train-test split ratio, learning rate in optimization algorithms (e.g. gradient descent, etc.), choice of optimization algorithm (e.g., gradient descent, stochastic gradient descent, or Adam optimizer, etc.), choice of activation function in a neural network (NN) layer (e.g. Sigmoid, ReLU, Tanh, etc.), choice of cost or loss function the model will use (e.g. root mean squared error (RMSE), mean square error (MSE), etc.), number of hidden layers in a NN, number of activation units in each layer, drop-out rate/probability in NN, number of iterations (epochs) in training, number of clusters in a clustering task, kernel or filter size in convolutional layers, pooling size, batch size, and/or any other parameter or value that is decided before training begins and whose values or configuration does not change when training ends. The hyperparameters may be predetermined for each FL ML model 104a and may be provided as part of each FL ML model 104a and/or retrieved from FL service when the FL ML model 104a is retrieved by FL services component 305. It should be noted that the cost of training of the FL ML model 104a-n may not only depend on the capabilities of the model, also it may depend on the hyperparameters, e.g. requirements, of the model, and/or type and amount of the training samples.

Once trained and depending on whether any of the remaining available cost budget, $C_R$, of the total available cost budget, **C**, remains, the FL ML model/service selector 307a is further configured to select each of the remaining FL ML models 104a in order of descending utility for training. The selected FL ML model 104a associated with the FL service is then passed to the Sample selector module 307b which computes the losses of the selected FL ML model on the local data/user data stored in local storage 308, and uses these losses to select an appropriate proportion of high-loss and low-loss training samples suitable for training the selected FL ML model 104a, which may be stored in sample storage 307d. The number of selected training samples and the cost budget per sample of the selected FL ML model 104a may be used to determine an individual cost budget for the selected FL ML model 104a. Each of the FL ML models 104a-104i have a corresponding individual cost budget and, for each individual cost budget, a number of training samples for the FL ML models 104a-104i are selected such that the summation or aggregation of the individual cost budgets may be less than or equal to the total available cost budget, **C**.

Prior to training of the FL ML models 104a-104j, a remaining available cost budget, $C_R$, is initialised to the total available cost budget, **C**. The remaining available cost budget, $C_R$ is used to track how much of the total available cost budget, **C**, has been used for training each of the FL ML models 104a-104j. For the FL ML model 104a, the selected training samples are passed to the FL trainer component 306 along with the selected FL ML model 104a for local training on the underlying hardware (e.g., CPU 302 and/or GPU 303 and the like). For example, the training of FL ML model 104a may be performed in a standard way such as, without limitation, for example using gradient descent based approaches and/or any other approach suitable for the type of ML model used to define the FL ML model 104a of the FL service/server 102a. Once the FL ML model 104a has used up the corresponding individual cost budget on the corresponding resources of the edge device 300, a budget updater 307f is used to update the remaining available cost budget, $C_R$, of the total available cost budget, **C**. For example, the remaining available cost budget, $C_R$, of the total available cost budget, **C**, is updated based on removing the individual cost budget for the FL ML model 104a (e.g., $C_R = C_R$ - individual cost budget of each FL model). If a certain class is learned well (e.g., it has better performance on a threshold accuracy score), this class is removed from the user preferences (e.g., **P** matrix), which ensures resources are not wasted on learning the same class/capability repeatedly. The budget updater 307f checks to see if any remaining available cost budget, $C_R$, of the total available cost budget, **C**, is available for training any of the subsequent FL ML models 104b-104j. If there is some remaining available cost budget, $C_R$, then the process is repeated with the next FL ML model 104b of the FL service in the descending order of utility (e.g., $U_b$). However, if there is no more remaining available cost budget, $C_R$, then the FL broker subsystem 307 may pass to a stop/wait component 307g, which is configured to stop and wait for more total available cost budget, **C**, in another time period, when the remaining available cost budget, $C_R$, is reset to the of the total available cost budget, **C**.

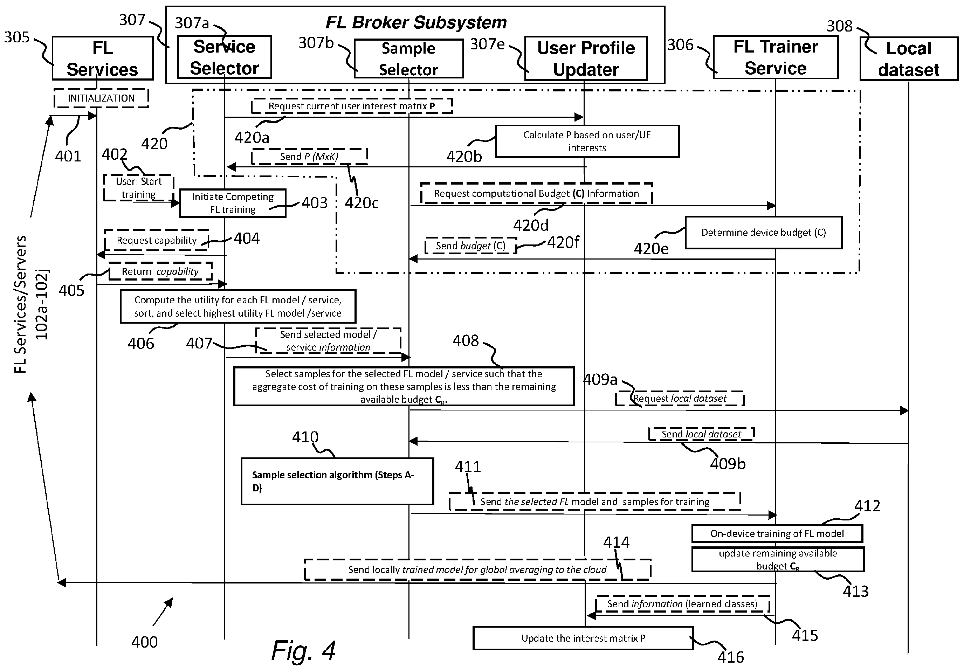

FIG. 4 is a signal diagram illustrating another example of an FL ML training process 400 performed in the edge device 106a-n by FL broker subsystem 307 of FIG. 3 in accordance with an example embodiment. The FL broker subsystem 307 is based on three insights, which include: a) the training cost of an FL ML model is proportional to the number of training samples (or batches), thus, by minimizing the number of training samples or training batches for each FL ML model, then potentially more FL ML models may be trained within the total available budget **C** within each time period, or until the remaining available budget $C_R$ resets back to the total available budget **C** in the next time instance or FL ML training session; b) in order to minimize the number of training samples for an FL ML model, the FL broker subsystem is configured to select the 'highest quality' training samples that achieves the best possible accuracy with the least number of training samples as possible; note, the highest quality data or training samples may be different for different FL ML training tasks; and c) the data quality of a training sample may be approximated by performing, prior to selection of the FL ML model, a forward pass of the FL ML model and computing the loss (or error) on the training sample (e.g., the difference between the class that is output of the FL ML model in response to the input training sample and the class associated with the input training sample). For example, if the FL ML model has a 'high-loss' on a training sample (e.g., large error), this training sample may be useful for the FL ML model as it can provide, without limitation, for example strong gradients to train the FL ML model. At the same time, the training samples may be also selected to ensure that the FL ML model is also exposed to sufficient 'low-loss' training samples to prevent 'catastrophic forgetting'. For example, if the FL ML model has a 'low-loss' on a training sample (e.g., small error), this training sample may be useful for the FL ML model to personalize to the user data on the edge device, but it can also ensure the FL ML model maintains its accuracy across a wide range of inputs and so prevents 'catastrophic forgetting'. The FL ML training process 400 includes the following operations of:

In operation 401, the FL services component 305 of the edge device 300 is configured for receiving and store multiple FL ML models 104a-104i and their corresponding capabilities/requirement information. For example, there may be N competing FL ML models for corresponding FL services/servers 102a-102m, each of which would like the edge device 300 to train their corresponding FL ML model on the local data/user data from local storage 308 of the edge device 300. Each FL ML model 104a-j of an FL service may require either: a) low-loss samples; or b) both high-loss samples and low-loss samples from the edge device for training the FL ML model 104a-j. In addition, each FL service associated with each FL ML model 104a may provide capability/requirement information including data represent-

ative of two tensors $\mathbf{X_L}$, $\mathbf{X_{ALL}}$, which respectively describe the capabilities of the FL ML model 104a of FL service/server 102a when it is trained with only low-loss training samples ($\mathbf{X_L}$) or with both a proportion of high-loss and low-loss training samples ($\mathbf{X_{ALL}}$). The capability/requirement information $\mathbf{X_L}$, $\mathbf{X_{ALL}}$ may include data representative of the number of output classes associated with the FL ML model 104a. Each of the two tensors $\mathbf{X_L}$, $\mathbf{X_{ALL}}$ may be a $K$ dimensional matrix. Once the FL ML models 104a-104i and capability matrices $\mathbf{X_L}$, $\mathbf{X_{ALL}}$ for each FL service/server 102a are received from, without limitation, for example the cloud, they are stored on the local storage 308 of the edge device 300.

In operation 402, a user may initiate training of the FL ML models 104a-104i that are received by the FL service module 305, where the Service selector component 307a of the FL broker subsystem 307 is configured to initiate competing FL ML training in relation to the FL ML models 104a-104i of the FL services/serves 102a-102i and the like. In operation 403, the Service Selector component 307a initiates the FL ML model training of the competing FL services in relation to the received FL ML models 104a-104i.

In operation 403 or prior to operations 402 or 403, the Service Selector component 307a may also request/receive user preferences and/or a total available cost budget, $\mathbf{C}$, for the edge device 300. This may invoke one or more steps of the user preferences and costing background process 420 (420a-f), which performs various operations for determining/retrieving a user preferences matrix or tensor, $\mathbf{P}$, and/or performs various operations for determining/retrieving a total available cost budget, $\mathbf{C}$, selected by the user and/or operating system of the edge device 300. On receiving a request for user preferences or running as a continuous process in the edge device 106, the background process 420 may perform the following operations of:

In operation 420a, the service selector component 307a may request the current user preference/interest matrix $\mathbf{P}$ from the user profiler updater 307e. On receiving the request for the current user preference/interest matrix $\mathbf{P}$, in operation 420b, the user profiler updater 307e may calculate the user preference/interest matrix $\mathbf{P}$ based on the user/edge device 300 interests or preferences associated with the FL ML models 104a-104i. For example, the user preferences/interest matrix $\mathbf{P}$ may be determined based on the interests of the user/edge device 300. Let $\mathbf{p}$ be an $M \times 1$ dimensional vector that describes $M$ 'interests' of the user/edge device or $M$ capabilities that are of interest to the user/edge device. For instance, the user may be interested in one or more new capabilities for their edge device 300 that may be fulfilled by the FL ML models 104a-104i. Example capabilities of the FL ML models 104a-104i may include, without limitation, for example detection of running, detection of walking, detection of playing squash, detection of drinking water, detection of surrounding objects, detection of blood pressure, detection different types of heart arrhythmia, and/or any other type of prediction/detection estimation that is of interest to the user and which uses at least local data/user data stored in local storage 308 of edge device 300. The $M$ capabilities that is of interest to the user may be represented as words or phrases associated with the type of capability, which may be in line with the description of the capabilities or detection classes of each of the FL ML models 104a-104j. These capabilities (e.g. running, walking, detection of objects, etc.) may be presented to the user in a drop down menu, which the user selects to be of interest. Each of the FL ML models 104a-104j may support one or more of the capabilities that are of interest to the user. The user preferences/interest capabilities vector $\mathbf{p}$, may be passed through an embedding generator to form an $M \times K$ dimensional user preference/interest matrix $\mathbf{P}$, where $K$ is the dimension of the embedding for each capability/interest in the user preferences/interest capabilities vector $\mathbf{p}$. Using the above 6 example capabilities (e.g., "running", "walking", "playing squash", "drinking water", "surrounding objects", "blood pressure" etc.), where $M$=6, the user preference/interest matrix $\mathbf{P}$ may be derived by embedding the vector, $\mathbf{p}$ = ["running", "walking", "playing squash", "drinking water", "surrounding objects", "blood pressure"], which is a $6 \times 1$ dimensional vector, to form an $M \times K$ dimensional user preference/interest matrix $\mathbf{P}$. As an example, a word embedding generator may be used on the vector $\mathbf{p}$ such as, without limitation, for example Word2Vec to obtain numeric embeddings for each word in vector $\mathbf{p}$. For example, "running" may be embedded as the K dimensional vector [0.2 0.3 0.4 0.10.10.5], and so on for the other 5 remaining capabilities. Thus, the user preferences/interest vector $\mathbf{p}$ is transformed into an $M \times K$ dimensional user preference/interest matrix or tensor $\mathbf{P}$, where $K$ is the dimension of each word embedding. In operation 420c, the user preferences/interest matrix or tensor, $\mathbf{P}$, is returned to the Service Selector component 307a.

Returning to operation 403 of the FL ML training process 400, after initiating the FL ML model training of the FL ML models 104a-104j retrieved/received by the FL Services component 305, in operation 404, the Service Selector component 307a sends a request to the FL Services component 305 for capability/requirement information associated with each of the FL ML models 104a-104j.

There may be $N$ competing FL ML models 104a-104j of FL services/servers 102a-102j, each of which would like to train the corresponding FL ML model 104a of the multiple FL ML models 104a-104j using the user data/local data stored in local storage 308 of the edge device 300. Given this, each FL service may require that the edge device 300 have the capability to generate both high-loss training samples and low-loss training samples from user data/local data stored in local storage 308 of the edge device 300, which maybe used for training the corresponding FL ML model 104a. Thus, either each of the FL services/servers 102a-102j provide, when the FL Services component 305 retrieves each of the FL ML models 104a-104j, or each of the FL ML models 104a-104j includes data representative of the capabilities information associated with the corresponding FL ML model 104a provided by the FL service/server 102a. The capabilities of the corresponding FL ML model 104a may include data representative of first and second capabilities tensors $X_L$ and $X_{ALL}$, which respectively describe an indication of the capabilities of the corresponding FL ML model 104a when trained on low-loss training samples and both low-loss and high-loss training samples, respectively. When an FL ML model 104a is trained using low-loss training samples, the first capabilities tensor $X_L$ provides an indication of what the FL ML model 104a is capable of detecting/predicting or estimating. When the FL ML model 104a is trained using both low-loss and high-loss training samples, the second capabilities tensor $X_{ALL}$ provides an indication of what the FL ML model 104a is capable of detecting/predicting or estimating. Typically, the FL ML model 104a is capable of detecting/predicting or estimating more classes associated with the model when trained on both low-loss and high-loss training samples compared with when only trained on low-loss training samples. Each of the first and second capabilities tensors $X_L$ and $X_{ALL}$ provide data representative of an indication of one or more output classes associated with the FL ML model 104a. For example, using several capabilities form the above 6 capabilities example, if an FL ML model 104a can currently detect only two classes: "running" and "walking" when trained using low-loss training samples, then the first capabilities tensor maybe based generating an embedding (e.g., using Word2Vec as performed for the user preferences matrix $P$) of each of these classes to form $X_L = $ [ [0.2 0.3 0.4 0.1 0.1 0.5], [0.10.2 0.3 0.4 0.1 0.5] ], which is a $K \times 2$ dimensional tensor (or matrix). In essence, low-loss training samples are useful for personalizing the FL ML model 104a to the user of the edge device 300, but it may not be capable of learning new classes. That said, by using both high-loss and low-loss training samples, the FL ML model 104a may be able to learn and detect multiple classes. For example, the FL ML model 104a may have the capability of being trained to learn and detect multiple classes such as, without limitation, for example up to four or more classes including: "running", "walking", "drinking water", "blood pressure" when trained using both low-loss training samples and high-loss training samples. Given this, the second capabilities tensor may be based generating an embedding (e.g., using Word2Vec as performed for the user preferences matrix $P$) of each of these classes to form $X_{ALL} = $ [ [0.2 0.3 0.4 0.1 0.1 0.5], [0.10.20.3 0.4 0.1 0.5], [0.3 0.4 0.5 0.2 0.1 0.5], [0.5 0.4 0.3 0.1 0.2 0.1]], which is a $K \times 4$ dimensional tensor (or matrix). Although, a further capabilities tensor $X_H$ may be defined for high-loss training samples only, this may lead to the FL ML model 104a, which has already been trained to a certain extent, to catastrophic forgetting, essentially detraining what it has already learnt.

In operation 405, each of capabilities/requirement information (e.g., $X_L$ and $X_{ALL}$) for each of the FL ML models 104a-104j is retrieved by the FL Services component 305 and sent in response to the capabilities information request of operation 404 to the Service Selector component 307a. Thus, the Service Selector component 307a of the FL Broker subsystem 307 receives the multiple FL ML models 104a-104j and corresponding capabilities information (e.g., $X_L$ and $X_{ALL}$) associated with each of the FL ML models 104a-104j associated with FL services/servers 102a-102j.

In operation 406, the Service Selector component 307a computes the utility or a utility measure for each of the FL ML models 104a-104j of FL service/servers 102a-102j, ranks or sorts the FL ML models 104a-104j based on the computed utility of each of the FL ML models 104a-104j, and initially selects the highest utility FL ML model 104a for training. In order for the Service Selector component 307a to compute the utility of training each of the FL ML models 104a-104j, the Service Selector component 307a is configured to multiply the $M \times K$ dimensional user preferences $P$ matrix (denoting the interests of the user in relation to the capabilities of the FL ML models 104a-104j) with each of the first and second capability tensors or matrices $X_L$ and $X_{ALL}$, each of which has a dimension of $K \times$ *(a number of classes the FL ML model supports when trained with low-loss samples or both low-loss and high-loss samples* ). For example, using the above example in operation 404, the first capability tensor $X_L$ was a $K \times 2$ dimensional tensor that included only two classes: "running" and "walking", which the FL ML model 104a was capable of detecting/predicting when trained with low-loss training samples, and the second capability tensor $X_{ALL}$ was a $K \times 4$ dimensional tensor that included only four classes: "running", "walking", "drinking water", "blood pressure", which the same FL ML model 104a was capable of detecting/predicting when trained with a combination of both low-loss training samples and high-loss training samples. Thus, multiplying the user preferences $P$ matrix with the first capability tensor $X_L$ of FL ML model 104a produces an $M \times 2$ dimensional first similarity matrix $Z_L$ of FL ML model 104a. In addition, multiplying the user preferences $P$ matrix with the second capability tensor $X_L$ of FL ML model 104a produces an $M \times 4$ dimensional second similarity matrix $Z_{ALL}$ of FL ML model 104a. This is performed for each of the FL ML models 104a-104j. In general, the $K \times$ *(a number of classes the FL ML model supports when trained with low-loss samples or both low-loss and high-loss samples* ) $Z$ matrix essentially denotes the similarity between each of the user preferences/interests (embeddings) represented by the $P$ matrix and each of the capabilities in the first or second capability matrices represented by the $X_L$ and $X_{ALL}$ tensors/matrices. To remove low magnitude noise, a threshold may be applied to each of the first and second similarity matrices $Z_L$ and $Z_{ALL}$

of each of the FL ML models 104a-104j, where all values less than the threshold are set to o.

For each FL ML model 104i of the multiple FL ML models 104a-104j, the utility of training the *i-th* FL ML model 104i of FL service/server, denoted $U_i$ can be expressed as the maximum of the utilities obtained by either training the FL ML model 104i on low-loss training samples or training the FL ML model 104i on both low-loss and high-loss training samples based on the following equation:

$$U_i = max(U_i^L, U_i^{ALL}),$$

where $U_i^L$ is the utility of training the FL ML model 104i on low- loss training samples, and $U_i^{ALL}$ is the utility of training the FL ML model 104i on both low-loss and high-loss training samples. The utility of training the FL ML model 104i on low-loss training samples is given by $U_i^L$ and may be obtained based on the following equation:

$$U_i^L = \frac{e^{sum(Z_i^L)}}{k} . S_i,$$

where $Z_i^L$ denotes the first similarity matrix $Z_L$ of FL ML model 104i, $sum(Z_i^L)$ is the sum of all elements $Z_i^L$, and where *k* is a scale factor between o and 1, which scales $U_i^L$, and is the proportion of low-loss training samples selected out of a total number of training samples $S_i$ that includes both low-loss training samples and high-loss training samples that may be generated using the local data/user data in local storage 308 on edge device 300. The utility of training the FL ML model 104i on both low-loss training samples and high-loss training samples is given by $U_i^{ALL}$ and may be obtained based on the following equation:

$$U_i^{ALL} = e^{sum(Z_i^{ALL})} . S_i,$$

where $Z_i^{ALL}$ denotes the second similarity matrix $Z_{ALL}$ of FL ML model 104i, $sum(Z_i^{ALL})$ is the sum of all elements of $Z_i^{ALL}$, and $S_i$ is the total number of training samples that includes both low-loss training samples and high-loss training samples that may be generated using the local data/user data in local storage 308 on edge device 300. Thus, the Service Selector component 307a calculates the utilities $U_a$, $U_b$, ..., $U_i$, ... , $U_j$ for each of the corresponding FL ML models 104a-104j. Once all the utilities $U_a$, $U_b$, ..., $U_i$,..., $U_j$ have been computed, the Service Selector component 307a ranks or sorts the FL ML models 104a-104j based on the computed utilities $U_a$, $U_b$, - - -, $U_i$,..., $U_j$ in a descending order of utility. For example, a list of the FL ML models 104a-104j mapped to their corresponding utilities $U_a$, $U_b$, ..., $U_i$, ..., $U_j$ may be formed, where the list of FL ML models 104a-104j is sorted based on the corresponding utilities $U_a$, $U_b$, - - -, $U_i$, ..., $U_j$ in a descending order of utility. Thus, where the sorted list has, for example, a first entry corresponding to FL ML model 104a with utility $U_a$, a second entry corresponding to FL ML model 104b with utility $U_b \leq U_a$, and so on, in which the *i-th* entry in the list may correspond to FL ML model 104i with utility $U_i \leq ... \leq U_b \leq U_a$, and the j-th entry in the sorted list may correspond to FL ML model 104j with utility $U_j \leq ... \leq ... U_i \leq ... \leq U_b \leq U_a$. With the sorted list of FL ML models 104a-104j, the Service Selector component 307a selects the FL ML model 104a having the highest or greatest utility in the ordered list, e.g. the topmost entry in the ordered list of FL ML models 104a-104j with utilities $U_a$, $U_b$,..., $U_i$,..., $U_j$. In this example, the topmost FL ML model in the ordered list is the FL ML model 104a with utility $U_a$, i.e. the FL ML model 104a with the highest utility $U_a$. Although the FL ML models 104a-104j have been described as having

computed utilities $U_a$, $U_b$, - - -, $U_i$ ,..., $U_j$ in a descending order, this is by way of example only and the system is not so limited, it is to be appreciated by the skilled person that the utilities $U_a$, $U_b$, ..., $U_i$ ,..., $U_j$ of the FL ML models 104a-104j may have any magnitude and be in any order, hence when sorted, the FL ML models 104a-104j and their corresponding utilities $U_a$, $U_b$, - - -, $U_i$ ,..., $U_j$ may be ordered based on descending order of utility into a list having a different permutation or ordering of the FL ML models 104a-104j with corresponding utilities ordered in descending order and the like. Although the FL ML models 104a-104j are described as ordered in a descending order of utility, this is by way of example only and the system is not so limited, it is to be appreciated by the skilled person that the FL ML models 104a-104j maybe ordered in an ascending order of utility, in which the Service Selector component 307a may select the FL ML model 104a having the highest or greatest utility, which in the above example will be the bottom most FL ML model 104a with utility $U_a$ in the ordered list. In any event, the FL ML models 104a-104j are ranked in order of their corresponding utilities $U_a$, $U_b$ ,...., $U_i$, - - -, $U_j$, in which the Service Selector component 307a selects the FL ML model 104i with the highest or greatest utility $U_i$.

In operation 407, the Service Selector 307a sends the selected FL ML model 104i with the highest utility $U_i$ to the Sample Selector 307b for selecting the appropriate number and type of training samples for training the selected FL ML model 104i.

In operation 407 or prior to operations 406 or 407, the Sample Selector component 307b may also request a total available cost budget, **C**, for the edge device 300. This may invoke one or more further steps of the user preferences and costing background process 420, which performs various operations for determining/retrieving a user preferences matrix or tensor, **P**, and/or performs various operations for determining/retrieving a total available cost budget, **C**, selected by the user and/or operating system of the edge device 300. On receiving a request for a total available cost budget, **C**, for the edge device 300, the background process 420 may perform the following operations of:

In operation 420d, the Sample Selector component 307b may request the FL trainer service component 306 to provide a total available cost budget, **C**, for the edge device 300 (e.g., computational budget information), which may have been selected by the user and/or the operating system of the edge device 300, or any other process and the like.

In operation 420e, on receiving the request for the total available cost budget, **C**, for the edge device 300, the FL Trainer Service 306 may initialize, retrieve and/or calculate the total available cost budget, **C**, for the edge device 300. As described with reference to FIGs 1 to 3, the total available cost budget, **C**, may include any one or more cost budgets that may be used to constrain, restrict and/or control the processing load for training of one or more FL ML models 104a-104j on the edge device 300 such that the user may still use the edge device 300 during training and/or the user is aware of when the edge device 300 may perform training of the one or more FL ML models 104a-104j, and so may refrain from using or excessive use of the edge device 300 and the like. The total available cost budget, **C**, may be any one or more combinations of cost budgets from the group of: an energy consumption budget; a time budget; communication budget; a processing budget; any other cost budget for tracking the cost of training one or more FL ML models on the edge device; one or more combinations of cost budgets from the group of cost budgets; and/or any other type of overall cost budget of the edge device 106a. For example, the total available cost budget, **C**, may be based on any type of resource available at the edge device 106a such as, without limitation, for example: an energy consumption budget (e.g., 10 kilo Joules per day or a reduction in the percentage of available battery charge); a processing budget such as, without limitation, for example a central processing unit (CPU) usage budget (e.g., 40% of CPU usage); a time budget (e.g., 60 minutes per day); a communication budget or cost; and or any other computational resource budget or other resource budget that may be measured and used to restrict and/or control training of the one or more FL ML models 104a-104j on the edge device 104a. As each FL ML model 104a is trained, a remaining available cost budget of $C_R$ the total available cost budget, **C**, is calculated, where initially the remaining available cost budget $C_R$ is equal to the total available cost budget, **C**, but which is then updated by removing the cost of training each FL ML model 104a from the remaining available cost budget, $C_R$. The training of each subsequent FL ML model continues until the total available cost budget, **C**, expires, i.e. until the remaining available cost budget, $C_R$ reaches o or until there is no further budget for training another FL ML model in the remaining available cost budget, $C_R$. As well, the total available cost budget, **C**, may be scheduled to be used in performing training of the FL ML models 104a-104j periodically or per time period (e.g., per hour, per day or week etc.), and/or for use in performing training at other times, such as, when it is detected the user is not using the edge device 300 or unlikely to use the edge device 300 until after a remaining available cost budget, $C_R$, of the total available cost budget, **C**, expires and the like. Thus, at each time that the edge device 300 is scheduled to perform a training session of the FL ML models 104a-104j, the total available cost budget, **C**, is available to be used until the remaining available cost budget, $C_R$ expires during that training session of one or more of the FL ML models 104a-104j. This is an iterative training process, where further FL ML models 104a-104j are trained in subsequent iterations at a subsequent time using the total available cost budget, **C**.

Initially, the total cost available budget, **C**, may be specified by, without limitation, for example by the user of the edge device 106a or by the edge device's operating system and/or in any other manner and the like. Once initialised, the FL trainer service component 306 may then initialise the remaining available cost budget, $C_R$ to be equal to the total available cost budget, **C**, and then track and update the remaining available cost budget, $C_R$, per training session of each of the FL ML models 104a-104j. That is, after training one of the selected FL ML models 104a-104j, the FL trainer service component 306 removes the cost of having trained the selected FL ML model from the remaining available cost budget, $C_R$, (e.g., $C_R = C_R$ - cost of training selected FL ML model ($C_M$)) and notifies, upon request from the Sample Selector component 307b, the remaining available cost budget, $C_R$. This enables the Sample Selector component 307b to select a number of training samples for a subsequent selected FL ML model such that the aggregate cost of training the selected FL ML model on these training samples is less than the remaining available cost budget, $C_R$.

In operation 420f, the FL trainer service component 306 sends the remaining available cost budget, $C_R$, which is initially set to the total available cost budget **C**, to the Sample Selector component 307b. For the first selected FL ML model 104a, the remaining available cost budget, $C_R$, is the total available cost budget, **C**, without any adjustment by the FL Trainer service component 306.

Alternatively, the cost budget process 420d-f may be running as a continuous background process that keeps the cost budget information updated.

In operation 408, the Sample selector component 307b, performs a sample selection process for selecting samples for the selected FL ML model 104a of the corresponding FL service/server 102a such that the aggregate cost of training on these samples is less than the remaining available cost budget, $C_R$.

In operation 409a, the Sample selector component 307b sends, to the local storage 308, a request for user data/local dataset for use in generating a suitable set of training samples for training the selected FL ML model 104a. The Sample selector component 307b may retrieve training sample selection logic associated with the selected FL ML model/service 104a. This may be used to generate a suitable set of training samples from the retrieved user data/local dataset for training the selected FL ML model 104a for outputting the classes associated with the capabilities of interest to the user. The training sample selection logic (or training sample generation/retrieval instructions or logic) can be unique to each FL ML model/FL service as it is used to generate a set of training samples that are specific for training said each FL ML model. Thus, the Sample selector component 307b may simply request access to all the local dataset/user data for generating all the local training samples for the selected FL ML model. The Sample Selector 307b can then select those training samples from all of the local training samples for training the selected FL ML model 104a within the remaining available cost budget, $C_R$.

In other embodiments, in operation 409a, the Sample Selector component 307b may send, to the local storage 308, a request for one or more specific portions of the user data/local dataset stored on local storage 308 that are required for generating the specific set of training samples for training the selected FL ML model 104a. For example, the Sample Selector component 307b may generate the request for the required user data/local dataset based on functionality or a training sample generation/retrieval instructions specific to the FL ML model 104a, which maybe used by the Sample Selector component 307b for retrieving the required portions of user data/local dataset from local storage 308 that are required for generating the set of training samples for training the selected FL ML model 104a. The FL services component 305 may provide the training sample generation/retrieval instructions for the selected FL ML model 104a to the Sample selector component 307b. Alternatively or additionally, these training sample generation/retrieval instructions may be included as meta-data or other data associated with the selected FL ML model 104a when retrieved from the FL service/server 102a, where the Sample selector component 307b extracts/reads these training sample generation/retrieval instructions for the selected FL ML model 104a, and requests the required portions of user data/local dataset from the local storage 308 of the edge device 300. Alternatively or additionally, these training sample generation/retrieval instructions may be provided separately by the FL service/server 102a when the selected FL ML model 104a is retrieved from the FL service/server 102a, which is provided to the FL broker subsystem 307 for storage and retrieval by the Sample selector component 307b when required.

In operation 409b, the local storage component 308 sends the requested user data/local dataset to the Sample Selector component 307b for use in generating a set of training samples for the FL ML model 104a. In other embodiments, when the Sample Selector component 307b requests specific portions of user data/local dataset, once the local storage component 308 has retrieved these specific portions of user data/local dataset for use by Sample Selector component 307b in generating the set of training samples, the local storage component 308 sends the specific portions of user data/local dataset to the Sample Selector component 307b for generating and selecting a set of training samples from the received portions of the user data/local dataset.

In operation 410, the Sample Selector component 307b performs a data selection algorithm / process for selecting a set of training samples from the retrieved user data/local dataset for use in training the selected FL ML model 104a whilst meeting the following objectives: 1) ensuring the individual training cost for training the selected FL ML model 104a is less than or equal to the remaining available cost budget, **C$_R$**; and 2) maximising the total aggregate utility, $U_{TOTAL}$, over the number, $N$, of FL ML models 104a-104j of interest to the user of the edge device 300.

The first objective is based on ensuring a set of training samples, $S_i$, is selected for each of a number $N$ of FL ML models 104a-104j to ensure the following condition is met:

$$c_1\left(S_1^L + \alpha_1 S_1^H\right) + c_2\left(S_2^L + \alpha_2 S_2^H\right) + \cdots + c_N\left(S_N^L + \alpha_N S_N^H\right) \leq C,$$

where, $c_i$ is the individual training cost per sample for the *i-th* FL ML model 104i for $1 \leq i \leq N$, $S_i^L$ is the number of selected low-loss training samples in the selected set of training samples, $S_i$ for the *i-th* selected FL ML model 104i, $S_i^H$ is the number of selected high-loss training samples in the selected set of training samples, $S_i$ for the *i-th* selected FL ML model 104i, and $\alpha_i$ is a binary value in which $\alpha_i$ = 0 when $U_i^L > U_i^{ALL}$ otherwise $\alpha_i$ = 1. To have knowledge of the individual training cost per sample, $c_i$, apriori, the edge device 300 requires knowledge of $c_i$, which is the unit cost of training the FL ML model on the edge device 300. Such information of $c_i$ may be obtained by performing offline profiling of training the FL ML model on the edge device 300. Alternatively or additionally, the edge device 300 on receiving each of the FL ML models 104a-104j may estimate $c_i$ for each of the FL ML models 104a-104j by generating a sufficient sample set of training samples for training each of the FL ML models 104a-104i whilst measuring the resource cost of training, and thereafter determining an estimate of the unit cost or the individual training cost per sample, $c_i$, for each of the FL ML models 104a-104j.

The second objective is based on ensuring the total aggregate utility, $U_{TOTAL}$, over the number, $N$, of FL ML models 104a-104j of interest to the user of the edge device 300 is maximised, where:

$$U_{total} = U_1 + U_2 + \cdots + U_N,$$

where $U_i$ denotes the utility gain by training on the *i-th* FL ML model 104i associated with the i-th FL service/server, for $1 \leq i \leq N$.

Thus, the data selection algorithm / process for selecting the set of training samples, $S_i$ for the *i-th* selected FL ML model 104i, for $1 \leq i \leq N$, is based on a greedy approach based on the following steps of:

A. Measure the loss of the *i-th* selected FL ML model 104i (e.g., error between ground truth and the output of the FL ML model 104i) using the retrieved local dataset of the edge device 300. The Sample Selector component 307b may generate a plurality of training samples derived from the retrieved user data/local dataset for use in training the *i-th* selected FL ML model 104i. As an example, each training sample may include an input data instance and ground truth output data instance (or an annotated label and the like), which may be used for supervised training of the *i-th* selected FL ML model 104i. However, rather than training the *i-th* selected FL ML model 104i using the plurality of training samples, where the input data instances of the plurality of training samples are applied as input to the *i-th* FL ML model 104i whilst in inference mode. Depending on the type of FL ML model that is being trained, each of the input data instances of the plurality of training samples may be annotated with a ground truth label or ground truth output data instance, which is derived from the retrieved user data/local dataset when generating the corresponding training sample. Thus, the loss of the *i-th* selected FL ML model 104i may be measured by applying the plurality of input data instances to the *i-th* FL ML model 104i the output of which may be used to generate a plurality of loss values (e.g., error between ground truth label associated with the input data instance and the output of the FL ML model 104i), each loss value corresponding to an input data instance of the plurality of input data instances.

Let $L_i^L$ and $L_i^H$ be the lowest loss value and highest loss values obtained from the plurality of loss values. The mean loss value may be denoted, $L_i^{mean}$, and may be calculated based on $L_i^{mean} = \left(L_i^L + L_i^H\right)/2$. In another embodiment, the mean loss value, $L_i^{mean}$, may be computed by based on taking an average between $L_i^L$ and the 90% percentile of high loss values, which provides the further advantage that the calculation of mean loss value,

$L_i^{mean}$ , is not impacted by noisy training samples with extremely high loss. The mean loss value, $L_i^{mean}$ , may be output as the measured loss of the *i-th* selected FL ML model 104i.

B. Classifying each of the plurality of training samples as either a low-loss training sample or a high-loss training sample. This classification is performed, for each training sample, by comparing the loss associated with applying/inputting the input data instance corresponding to the training sample to the FL ML model 104i in step A, with the $L_i^{mean}$ , when the loss associated with inputting the corresponding input data instance to the FL ML model 104i is more than $L_i^{mean}$ , then the training sample is classified as a high-loss training sample, otherwise the training sample is classified as a low-loss training sample. Once all of the plurality of training samples have been classified as either low-loss training samples or high-loss training samples, the process proceeds to step C.

C. The utility of the low-loss samples, $U_i^L$ , is compared with the utility of both low-loss and high-loss training samples, $U_i^{ALL}$ , for each *i-th* FL ML model 104i. If $U_i^L > U_i^{ALL}$ for the selected *i-th* FL ML model 104i, then $\alpha_i$ = 0, otherwise $\alpha_i$ = 1. For example, if training the selected FL ML model on low-loss training samples has a higher utility than training the selected FL ML model on all training samples, then the selected FL ML model is only trained on low-loss training samples.

D. A set of training samples, $S_i$ , for the *i-th* selected FL ML model 104i is selected by sampling the plurality of training samples for the selected *i-th* FL ML model 104i and selecting from the total number, $S_{TOTAL}$, of the plurality of training samples a first number, $S_i^L$ , of low-loss training samples and, if $\alpha_i$ = 1, a second number, $S_i^H$ , of high-loss training samples. The number of low-loss training samples $S_i^L$ that are selected is based on determining or selecting a value $0 < k \le 1$ such that $S_i^L = kS_{TOTAL}$ and, and similarly, the number of high-loss training samples $S_i^H$ that are selected is based on $S_i^H = \alpha_i\,(1-k)S_{TOTAL}$ , which is constrained based on $c_i\,(S_i^L + \alpha_i\,S_i^H) \le C_R$, where the remaining available cost budget is denoted $C_R$. That is, $k$ is selected for the *i-th* FL ML model 104i, so that, overall or total available cost budget is met based on:

$$c_1\left(S_1^L + \alpha_1 S_1^H\right) + c_2\left(S_2^L + \alpha_2 S_2^H\right) + \cdots + c_N\left(S_N^L + \alpha_N S_N^H\right) \le C,$$

where **C** is the total available cost budget, **C**. Based on this, the Sample Selector 307b selects a set of training samples, $S_i$ for use in training the *i-th* FL ML model 104i. In some situations, if the edge device 300 does not have budget to train on all the selected set of training samples, $S_i$ , it can select a subset of the set of training samples, $S_i'$ , that meets the remaining total available cost budget.

Thus, for the selected FL ML model 104a, the above steps and operations as described in operation 410 are performed, where a selected set of training samples, $S_a$, for the selected FL ML model 104a is output by the Sample selector component 307b.

In operation 411, the selected set of training samples, $S_a$ , for the selected FL ML model 104a and the selected FL ML model 104a are passed from the Sample Selector component 307b to the FL Trainer service component 306 of the edge device 300 for on-device training.

In operation 412, the FL Trainer service performs on-device training of the selected FL ML model 104a using the selected set of training samples, $S_a$ . Training of the selected FL ML model 104a using the selected set of training samples, $S_a$ , may be performed as described with reference to FIGs. 1 to 3. For example, on-device training of the FL ML model 104a with the selected set of training samples, $S_a$ , using standard gradient descent may be performed. Although standard gradient descent has been described, this is by way of example only, it is to be appreciated to the skilled person that any suitable type of ML training method or algorithm associated with training FL ML model 104a using the selected set of training samples, $S_a$, may be applied as the application demands.

In operation 413, once the training of the FL ML model 104a finishes, the remaining available cost budget, $C_R$, is updated by reducing the individual training cost of training the selected FL ML model 104a of the FL service/server 102a using the selected set of training samples, $S_a$. For example, for the selected FL ML model 104a, $c_a$ is the individual training cost per sample for the FL ML model 104a, $S_a^L$ is the number of selected low-loss training samples in the selected set of training samples, $S_a$ for the selected FL ML model 104a, $S_a^H$ the number of selected high-loss training samples in the selected set of training samples, $S_a$ for the selected FL ML model 104a, and $\alpha_a$ is a binary value in which $\alpha_a$ = 0 when $U_a^L > U_a^{ALL}$ otherwise $\alpha_a$ = 1. Thus, the individual training cost for training FL ML model 104a may be calculated or estimated to be $c_a \ (S_a^L + \alpha_a \ S_a^H)$. Given this, the FL Trainer service 306 may update the remaining available cost budget, $C_R$, by removing the individual training cost for training FL ML model 104a. For example, the remaining available cost budget, $C_R$ can be updated based on $C_R = C_R - c_a \ (S_a^L + \alpha_a \ S_a^H)$.

In operation 414, the FL Trainer service 306 determines whether the FL ML model 104a is sufficiently trained or not. For example, all the loss values at the output of the FL ML model (e.g. a loss may be the error between a ground truth data point and the corresponding output of the FL ML model 104a) are less than an error threshold. If the FL Trainer service component 306 determines that the selected FL ML model 104a is sufficiently trained, then it sends the locally trained FL ML model 104a to the corresponding FL service/server 102a for use in global averaging to generate an aggregate or final FL ML model from a plurality of edge devices (not shown) including the edge device 300. This may be performed in the cloud and the like.

In operation 415, the FL Trainer service component 306 may also determine whether the trained FL ML model 104a has learnt one or more a certain classes/capabilities well (e.g., it has better performance on a threshold accuracy score). If this is the case, then these one or more classes/capabilities should be removed from the user preferences/interest **P** matrix, and so the FL Trainer component 306 sends data representative of these one or more classes/capabilities to the User Profile Updater component 307e. The process may proceed to operation 416 for updating the user preferences/interest **P** matrix. This provides the advantage that computing resources are not wasted on learning the same class/capability repeatedly. On the other hand, if the user preferences/interest **P** matrix does not require updating, then the process proceeds to repeat operations 406-415, where in operation 406, the next ranked FL ML model 104b in the list of ranked FL ML models 104a-104j may be selected for training and thus, in operation 407 the next ranked FL ML model 104b is sent to the Sample Selector component and operations 408 to 413 may be repeated on the selected FL ML model 104b using the remaining available cost budget, $C_R$, that was previously updated in operation 413. The operations 406-415 may be repeated for each of the remaining ranked FL ML models in the descending order of utility, until the remaining available training cost budget, $C_R$, is expired. Should the remaining available training cost budget, $C_R$, expire before the end of the list of ranked FL ML models, i.e., some of the FL ML models remain untrained, then the FL ML training process 400 may be repeated in another scheduled time instance or period when the remaining available training cost budget, $C_R$ is reset back to the total available training cost budget, **C**, i.e. $C_R = C$.

In operation 416, the User Profile Updater component 307e may update or recalculate the user preferences/capabilities matrix **P** in operation 420b. In operation 420c, the updated user preferences/capabilities matrix **P** may be sent to the Service Selector component 307a, where operation 406 may be repeated in which the utilities of the FL ML models 104a-104j may be recomputed based on the updated user preferences/capabilities matrix **P**, and where each of the FL ML models 104a-104j are ranked based on descending order of utility (i.e. each utility may have changed), where the FL ML model with the highest utility is selected for training. Thus, in operation operation 407 the FL ML model with highest utility is sent to the Sample Selector component and operations 408 to 415 may be repeated on the selected FL ML model using the remaining total available budget, $C_R$, that was previously updated in operation 413. The operations 406-415 may be repeated for each of the remaining ranked FL ML models in the descending order of utility, until the remaining available training cost budget, $C_R$, is expired. Should the remaining available training cost budget, $C_R$, expire before the end of the list of ranked FL ML models, i.e., some of the FL ML models remain untrained, then the FL ML training process 400 may be repeated in another scheduled time instance or period when the remaining available training cost budget, $C_R$ is reset back to the total available training cost budget, **C**, i.e. $C_R = C$.

Thus, the various operations of the FL ML training process 400 repeat until all of the FL ML models 104a-104j have been sufficiently trained and have been sent back to their corresponding FL services/servers 102a-102j for global aggregation/averaging in the cloud and the like. Of course, when a sufficient amount of new user data/local data is stored in the local storage 308, the FL ML training process 400 may be performed again using the user data/local datasets for generating training samples for training the FL ML models 104a-104j in a similar fashion as described with reference to FIGs 1 to 4.

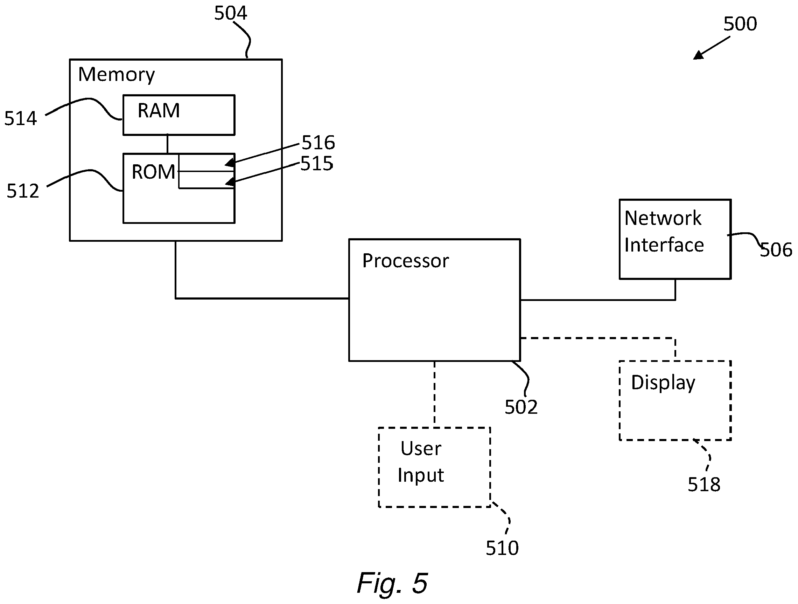

For completeness, FIG. 5 is a schematic diagram of components of one or more of the example embodiments described previously, which hereafter are referred to generically as a processing system 500. The processing system 500 may, for example, be (or may include) the apparatus/device 106 or 300 referred to in the claims below.

The processing system 500 may have one or more processors 502, one or more memories 504 coupled to the processor and comprised of a RAM 514 and a ROM 512, and, optionally, a user input 510, a display 518 and one or more sensor devices that create sensor data as user data / local data. The one or more sensors comprises, for example, a Global navigation satellite system (GNSS) sensor, an inertial measurement unit (IMU), a gyroscope, a light sensor, an accelerometer, a proximity sensor, an electromyography (EMG) sensor, a physiological sensor (such as a heart rate sensor, an electrocardiogram sensor, a blood pressure sensor, a blood glucose level sensor, a blood oxygen saturation sensor), a microphone, a still/video camera sensor, a motion detector, a radar sensor, a LIDAR (laser imaging, detection, and ranging) sensor, etc. or any combination thereof. The processing system 500 may comprise one or more network/apparatus interfaces 506 for a wired and/or wireless connection to a network/apparatus, wherein the wired and/or wireless connection comprises, for example, short range wireless connection (such as Bluetooth®, ultra-wide band (UWB), wireless local area network (WLAN), near-field communication (NFC), etc.), mobile telecommunication connection (such as 5G release of 3GPP (5th Generation release of the 3rd Generation Partnership Project) or any generation or the 3GPP), Ethernet protocol connection, USB (Universal Serial Bus) protocol connection, or any combination thereof. The network/apparatus interface 506 may also operate as a connection to other apparatus such as device/apparatus which is not network side apparatus. Thus, direct connection between devices/apparatus without network participation is possible.

The processor 502 is connected to each of the other components in order to control operation thereof.

The memory 504 may comprise a non-volatile memory, such as a hard disk drive (HDD) or a solid state drive (SSD). The ROM 512 of the memory 504 stores, amongst other things, an operating system 515 and may store software applications 516. The RAM 514 of the memory 504 is used by the processor 502 for the temporary storage of data. The operating system 515 may contain code which, when executed by the processor implements aspects of the functionality of system 100, and/or implements aspects of methods, algorithms and signal diagrams 200-400 described above with reference to FIGs 1 to 4. Note that in the case of small device/apparatus the memory can be most suitable for small size usage i.e. not always a hard disk drive (HDD) or a solid state drive (SSD) is used.

The processor 502 may take any suitable form. For instance, it may be a microcontroller, a plurality of microcontrollers, a processor, or a plurality of processors.

The processing system 500 may be an edge device, user equipment, user device, smart phone, laptop, standalone computer, a server, a console, or a network thereof. The processing system 500 and needed structural parts may be all inside device/apparatus such as IoT device/apparatus i.e. embedded to very small size.

In some example embodiments, the processing system 500 may also be associated with external software applications of FL services. These may be applications or FL services stored on a remote server device/apparatus and may run partly or exclusively on the remote server device/apparatus. These applications or FL services may be termed cloud-hosted applications or FL services. The processing system 500 may be in communication with the remote server device/apparatus in order to utilize the software application or FL service and the like stored there.

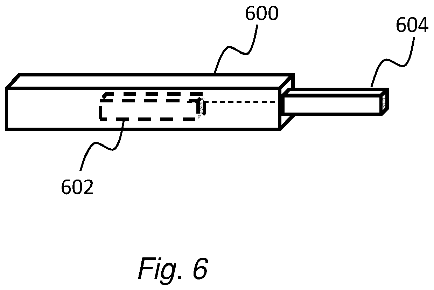

FIG. 6 shows tangible media, specifically a removable memory unit 600, storing computer-readable code which when run by a computer may perform methods, algorithms, and/or signal diagrams according to example embodiments described above. The removable memory unit 600 may be a memory stick, e.g., a USB memory stick, having internal memory 602 storing the computer-readable code. The internal memory 602 may be accessed by a computer system via a connector 604. Other forms of tangible storage media may be used. Tangible media can be any device/apparatus capable of storing data/information which data/information can be exchanged between devices/apparatus/network.

Embodiments of the present invention may be implemented in software, hardware, application logic or a combination of software, hardware and application logic. The software, application logic and/or hardware may reside on memory, or any computer media. In an example embodiment, the application logic, software or an instruction set is maintained on any one of various conventional computer-readable media. In the context of this document, a "memory" or "computer-readable medium" may be any non-transitory media or means that can contain, store, communicate, propagate or transport the instructions for use by or in connection with an instruction execution system, apparatus, or device, such as a computer.

Reference to, where relevant, "computer-readable medium", "computer program product", "tangibly embodied computer program" etc., or a "processor" or "processing circuitry" etc. should be understood to encompass not only computers having differing architectures such as single/multi-processor architectures and sequencers/parallel architectures, but also specialised circuits such as field programmable gate arrays FPGA, application specify circuits ASIC, signal processing devices/apparatus and other devices/apparatus. References to computer program, instructions, code etc. should be understood to express software for a programmable processor firmware such as the programmable content of a hardware device/apparatus as instructions for a processor or configured or configuration settings for a fixed function device/apparatus, gate array, programmable logic device/apparatus, etc.

If desired, the different functions discussed herein may be performed in a different order and/or concurrently with each other. Furthermore, if desired, one or more of the above-described functions may be optional or may be combined. Similarly, it will also be appreciated that the system and flow diagrams of FIGS. 1-4 are examples only and that various operations depicted therein may be omitted, reordered and/or combined.

As used in this application, the term "circuitry" may refer to one or more or all of the following: (a) hardware-only circuit implementations (such as implementations in only analog and/or digital circuitry); and (b) combinations of hardware circuits and software, such as (as applicable):

(i) a combination of analog and/or digital hardware circuit(s) with software/firmware and
(ii) any portions of hardware processor(s) with software (including digital signal processor(s)), software, and memory(ies) that work together to cause an apparatus, such as a mobile phone or server, to perform various functions); and
(iii) hardware circuit(s) and or processor(s), such as a microprocessor(s) or a portion of a microprocessor(s), that requires software (e.g., firmware) for operation, but the software may not be present when it is not needed for operation.

This definition of circuitry applies to all uses of this term in this application, including in any claims. As a further example, as used in this application, the term circuitry also covers an implementation of merely a hardware circuit or processor (or multiple processors) or portion of a hardware circuit or processor and its (or their) accompanying software and/or firmware. The term circuitry also covers, for example and if applicable to the particular claim element, a baseband integrated circuit or processor integrated circuit for a mobile device or a similar integrated circuit in server, a cellular network device, or other computing or network device.

It will be appreciated that the above described example embodiments are purely illustrative and are not limiting on the scope of the invention. Other variations and modifications will be apparent to persons skilled in the art upon reading the present specification.

Moreover, the disclosure of the present application should be understood to include any novel features or any novel combination of features either explicitly or implicitly disclosed herein or any generalization thereof and during the prosecution of the present application or of any application derived therefrom, new claims may be formulated to cover any such features and/or combination of such features.

Although various aspects of the invention are set out in the independent claims, other aspects of the invention comprise other combinations of features from the described example embodiments and/or the dependent claims with the features of the independent claims, and not solely the combinations explicitly set out in the claims.

It is also noted herein that while the above describes various examples, these descriptions should not be viewed in a limiting sense. Rather, there are several variations and modifications which may be made without departing from the scope of the present invention as defined in the appended claims.

**Claims**

1. An apparatus comprising means for performing:

    receiving, at an edge device, one or more FL machine learning, ML, models and capabilities information associated with one or more FL ML models;
    computing utility of the one or more FL ML models based a quality of available training samples at the edge device for training the corresponding FL ML models and said capabilities information;
    ranking the one or more FL ML models in a descending order of utility based on the computed utility of the one or more FL ML models; and
    performing training of the corresponding FL ML models in the descending order of utility until a remaining available cost budget of a total available cost budget of the edge device expires.

2. An apparatus as claimed in claim 1, wherein the available training samples at the edge device for training the corresponding FL ML model further comprising at least one of a set of high-loss training samples and a set of low-loss training samples associated with training said the corresponding FL ML model.

3. An apparatus as claimed in claims 1 or 2, further comprising means for performing:

    assigning the one or more FL ML models an individual cost budget of the total available cost budget for the edge device for training the corresponding FL models based, at least in part, on the capabilities information associated with the corresponding FL ML models; and

the means for performing training of the corresponding FL ML models further comprising selecting, for the one or more FL ML models a proportion of high-loss training samples and low-loss training samples on the edge device such that the aggregate individual cost budget for training an FL ML model on the selected training samples is less than a remaining available cost budget whilst the total utility gain for the edge device is maximised.

4. An apparatus as claimed in any of the preceding claims, wherein the means for performing training of the FL ML model in a descending order of utility further comprising means for performing:

selecting, from those ranked FL ML models that are untrained, an FL ML model having a highest utility;

selecting, for the selected FL ML model, a set of training samples from a proportion of a set of high loss training samples and a set of low-loss training samples associated with the FL ML model based on the corresponding utility and an individual cost budget assigned for said FL ML model, wherein the individual cost budget is less than the remaining available cost budget of the total available cost budget of the edge device;

training said FL ML model using the selected proportion of high-loss and low-loss training samples;

updating the remaining available cost budget for the edge device by removing the individual cost budget for said selected FL ML model from said remaining available cost budget; and

repeating performing training of another untrained FL ML model until the remaining cost budget of the total available cost budget of the edge device expires.

5. An apparatus as claimed in claim 4, wherein the means for selecting, for the selected FL ML model, the set of training samples further comprising means for performing:

generating a plurality of training samples for use in training the selected FL ML model based on the local dataset of the edge device, each training sample comprising an input data instance and ground truth output data instance;

measuring a mean loss value associated with the selected FL ML model based on applying the input data instances of the plurality of training samples to the selected FL ML model, wherein the mean loss value is estimated from the plurality of loss values in relation to the output data instance and corresponding ground truth output data instance;

classifying the plurality of training samples as either low-loss training sample or a high-loss training sample based on comparing the corresponding loss value of the training sample with the mean loss value;

determining of the FL ML model whether the selected set of training samples includes either low-loss training samples or both low-loss and high loss training samples;

selecting a set of training samples by sampling from the plurality of training samples a number of training samples based on the determination for training the selected FL ML model whilst meeting an individual cost budget that is less than the remaining available cost budget; and

outputting the selected set of training samples for training said selected FL ML model.

6. An apparatus as claimed in any preceding claim, wherein the edge device has one or more total available cost budgets per time period, the apparatus comprises means for repeating, in each time period, the performance of said computing the utility, said ranking the FL ML models and said performing training for any untrained FL ML models of the one or more FL services until the remaining available cost budget of the total available cost budget for said each time period expires.

7. An apparatus as claimed in any preceding claim, wherein computing the utility of the one or more FL ML models further comprising means for performing:

receiving data representative of a user preferences tensor or matrix, denoted P, indicating the capabilities of the FL ML models that are of interest to the user;

receiving, for a respective FL ML model, data representative of a first and second capabilities tensors or matrices, denoted $X_L$ and $X_{ALL}$, wherein the first capabilities tensor matrix, $X_L$, represents the capabilities of the FL ML model when trained on low-loss training samples, and the second capabilities tensor or matrix, $X_{ALL}$, represents the capabilities of the FL ML model when trained on both low-loss and high-loss training samples;

computing a first and second similarity tensors or matrices, denoted $Z_L$ and $Z_{ALL}$, based on multiplying the user preferences tensor or matrix, P, with each of the first and second capabilities tensors or matrices, $X_L$ and $X_{ALL}$;

calculating a first utility based on applying the first similarity tensor or matrix, $Z_L$, to a first utility function;

calculating a second utility based on applying the second similarity tensor or matrix, $Z_{ALL}$, to a second utility function; and

outputting a utility of the FL ML model based on the maximum of the first and second utility.

8. An apparatus as claimed in claim 7, wherein:

the first utility function for an *i-th* FL ML model is based on:

$$U_i^L = \frac{e^{sum(Z_i^L)}}{k} \cdot S_i,$$

where $Z_i^L$ denotes the first similarity matrix $Z_L$ of the *i-th* FL ML model, $sum(Z_i^L)$ is the sum of all elements of $Z_i^L$, and where $k$ is a scale factor between 0 and 1, which scales $U_i^L$, and is the proportion of low-loss training samples selected out of a total number of training samples $S_i$;
the second utility function for the *i-th* FL ML model is based on:

$$U_i^{ALL} = e^{sum(Z_i^{ALL})} \cdot S_i,$$

where $Z_i^{ALL}$ denotes the second similarity matrix $Z_{ALL}$ of the *i-th* FL ML model, $sum(Z_i^{ALL})$ is the sum of all elements of $Z_i^{ALL}$; and
the utility of the *i-th* FL ML model is computed based on:

$$U_i = max(U_i^L, U_i^{ALL}).$$

9. An apparatus as claimed in any preceding claim, wherein the means for performing training of the corresponding FL ML models further comprises means for performing:
selecting a set of training samples for each of a number $N$ of FL ML models whilst ensuring the following condition is met:

$$c_1\left(S_1^L + \alpha_1 S_1^H\right) + c_2\left(S_2^L + \alpha_2 S_2^H\right) + \cdots + c_N\left(S_N^L + \alpha_N S_N^H\right) \leq C,$$

where, $c_i$ is the individual training cost per sample for the *i-th* FL ML model for $1 \leq i \leq N$, $S_i^L$ is the number of selected low-loss training samples in the selected set of training samples for the *i-th* selected FL ML model, $S_i^H$ is the number of selected high-loss training samples in the selected set of training samples for the *i-th* selected FL ML model 104i, and $\alpha_i$ is a binary value in which $\alpha_i = 0$ when $U_i^L > U_i^{ALL}$ otherwise $\alpha_i = 1$.

10. An apparatus as claimed in any preceding claim, wherein the means for performing training of each of the corresponding FL ML models further comprises means for performing:
selecting each of a number $N$ of the FL ML models in a descending order of utility whilst maximizing:

$$U_{total} = U_1 + U_2 + \cdots + U_N,$$

where, $U_i$ is the computed utility for the *i-th* FL ML model for $1 \leq i \leq N$.

**11.** An apparatus as claimed in any of the preceding claims, wherein the total available cost budget of the edge device comprises any one or more cost budgets from the group of:

> an energy consumption budget;
> a time budget;
> a communication budget;
> a processing budget;
> any other cost budget for tracking the cost of training one or more FL ML model on the edge device;
> one or more combinations of cost budgets from the group;
> any other type of overall cost budget of the edge device.

**12.** An apparatus as claimed in any one of the preceding claims, further comprising means for performing:
training of the one or more FL ML models based on:

> obtaining a set of training samples associated with said FL ML model from local data of the edge device;
> applying a training sample to the FL ML model;
> estimating a loss based on a difference between the output of the FL ML model and the output indicated by each training sample; and
> updating a set of weights of the FL ML model based on the estimated loss.

**13.** An apparatus as claimed in any of the preceding claims, wherein the FL ML model comprises any ML model from the group of:

> neural network;
> transformer-based ML model;
> encoder-decoder ML model;
> any other ML model capable of being trained based on available training samples stored on the edge device.

**14.** An apparatus as claimed in any one of the preceding claims, wherein the means comprise:

> at least one processor; and
> at least one memory including computer program code, the at least one memory and computer program code configured to, with the at least one processor, cause the performance of the apparatus.

**15.** A method comprising:

> receiving, at an edge device one or more FL machine learning, ML, models and capabilities information associated with the one or more FL ML models;
> computing the utility of the one or more FL ML model based a quality of available training samples at the edge device for training the corresponding FL ML models and said capabilities information;
> ranking the FL ML models in a descending order of utility based on the computed utility of the FL ML models; and
> performing training of the corresponding FL ML models in the descending order of utility until a remaining available cost budget of a total available cost budget of the edge device expires.

**16.** A computer program comprising instructions for causing an apparatus to perform at least the following:

> receiving, at an edge device from one or more federated learning, FL, services, one or more FL machine learning, ML, models and capabilities information associated with each FL ML model;
> computing the utility of each FL ML model of each FL service based a quality of available training samples at the edge device for training the corresponding FL ML models and said capabilities information;
> ranking the FL ML models in a descending order of utility based on the computed utility of the FL ML models; and
> performing training of each of the corresponding FL ML models of each FL service in the descending order of utility until a remaining available cost budget of a total available cost budget of the edge device expires.

FIG. 1

200

201 ── RECEIVING, AT AN EDGE DEVICE FROM ONE OR MORE FEDERATED LEARNING, FL, SERVICES, ONE OR MORE FL MACHINE LEARNING, ML, MODELS AND CAPABILITIES INFORMATION ASSOCIATED WITH EACH FL ML MODEL

202 ── COMPUTING THE UTILITY OF EACH FL SERVICE BASED A QUALITY OF AVAILABLE TRAINING SAMPLES AT THE EDGE DEVICE FOR TRAINING THE CORRESPONDING FL ML MODELS AND SAID CAPABILITIES INFORMATION

203 ── RANKING THE FL SERVICES BASED ON THE COMPUTED UTILITY OF THE FL SERVICES

204 ── PERFORMING TRAINING OF THE CORRESPONDING FL ML MODELS OF EACH FL SERVICE IN A DESCENDING ORDER OF UTILITY UNTIL AN REMAINING AVAILABLE COST BUDGET OF A TOTAL AVAILABLE COST BUDGET OF THE EDGE DEVICE EXPIRES

205 ── OUTPUTTING ANY TRAINED FL ML MODELS TO CORRESPONDING FL SERVICES

206 ── Y   NEW COST BUDGET TIME PERIOD?   N

*FIG. 2a*

210

204

211

SELECTING, FROM THOSE RANKED FL ML MODELS THAT ARE UNTRAINED, AN FL ML MODEL HAVING A HIGHEST UTILITY

212

SELECTING, FOR THE SELECTED FL ML MODEL, A SET OF TRAINING SAMPLES FROM A PROPORTION OF A SET OF HIGH-LOSS TRAINING SAMPLES AND A SET OF LOW-LOSS TRAINING SAMPLES ASSOCIATED WITH THE FL ML MODEL BASED ON THE CORRESPONDING UTILITY AND THE INDIVIDUAL COST BUDGET ASSIGNED FOR THE FL ML MODEL

213

TRAINING SAID FL ML MODEL USING THE SELECTED PROPORTION OF HIGH-LOSS AND LOW-LOSS TRAINING SAMPLES

214

UPDATING THE REMAINING AVAILABLE COST BUDGET FOR THE EDGE DEVICE BY REMOVING THE INDIVIDUAL COST BUDGET FOR SAID SELECTED FL ML MODEL

215

N

REMAINING COST BUDGET EXPIRED?

Y

205

OUTPUTTING ANY TRAINED FL ML MODELS TO CORRESPONDING FL SERVICES

*FIG. 2b*

Fig. 3

FL Broker Subsystem

305 FL Services
307 307a Service Selector
307b Sample Selector
307e User Profile Updater
306 FL Trainer Service
308 Local dataset

INITIALIZATION 401

User: Start training 402
420 Initiate Competing FL training 403

420a Request current user interest matrix P
420b Calculate P based on user/UE interests
Send P (MxK) 420c

404 Request capability
405 Return capability
406 Compute the utility for each FL model / service, sort, and select highest utility FL model / service
407 Send selected model / service information

420d Request computational Budget (C) Information
420e Determine device budget (C)
Send budget (C) 420f

408 Select samples for the selected FL model / service such that the aggregate cost of training on these samples is less than the remaining available budget $C_R$.
410 Sample selection algorithm (Steps A-D)

409a Request local dataset
409b Send local dataset

411 Send the selected FL model and samples for training
412 On-device training of FL model
413 update remaining available budget $C_R$

414 Send locally trained model for global averaging to the cloud
415 Send information (learned classes)
416 Update the interest matrix P

400

FL Services/Servers [102a-102j]

*Fig. 4*

*Fig. 5*

EP 4 354 354 A1

604

600

602

Fig. 6

Europäisches
Patentamt
European
Patent Office
Office européen
des brevets

# EUROPEAN SEARCH REPORT

Application Number

EP 22 20 1578

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | LI ANRAN ET AL: "Sample-level Data Selection for Federated Learning", IEEE INFOCOM 2021 - IEEE CONFERENCE ON COMPUTER COMMUNICATIONS, IEEE, 10 May 2021 (2021-05-10), pages 1-10, XP033947305, DOI: 10.1109/INFOCOM42981.2021.9488723 [retrieved on 2021-07-15] * abstract * * page 2 - page 9 * | 1-16 | INV. G06N3/098 G06N3/045 |
| A | ZENG RONGFEI ET AL: "FMore: An Incentive Scheme of Multi-dimensional Auction for Federated Learning in MEC", 2020 IEEE 40TH INTERNATIONAL CONFERENCE ON DISTRIBUTED COMPUTING SYSTEMS (ICDCS), [Online] 29 November 2020 (2020-11-29), pages 278-288, XP093028939, DOI: 10.1109/ICDCS47774.2020.00094 ISBN: 978-1-7281-7002-2 Retrieved from the Internet: URL:https://ieeexplore.ieee.org/stampPDF/g etPDF.jsp?tp=&arnumber=9355731&ref=aHR0cHM 6Ly9pZWVleHBsb3JlLmllZWUub3JnL2Fic3RyYWN0L 2RvY3VtZW50LzkzNTU3MzE/Y2FzYV90b2tlbj1iVVY ObjVYU21tMEFBQUFBOnRIbEREMFhhfbkVnUmNWWnhwT zFzN2x4RTZadFlobVZGGNmpTazBBZmpSN1E2WnNiNm5 hMS03Y3B2dVSQ2ppanplQk96X3FMdg==> [retrieved on 2023-03-03] * the whole document * | 1-16 | |

| | | | TECHNICAL FIELDS SEARCHED (IPC) |
|---|---|---|---|
| | | | G06N |

The present search report has been drawn up for all claims

| Place of search | Date of completion of the search | Examiner |
|---|---|---|
| The Hague | 15 March 2023 | Tsakonas, Athanasios |